(19) **Europäisches Patentamt**
**European Patent Office**
**Office européen des brevets**

(11) **EP 4 611 324 A1**

(12) **EUROPEAN PATENT APPLICATION**
published in accordance with Art. 153(4) EPC

(43) Date of publication:
**03.09.2025 Bulletin 2025/36**

(21) Application number: **22964775.5**

(22) Date of filing: **09.11.2022**

(51) International Patent Classification (IPC):
**H04L 27/00** (2006.01)    **H04J 13/00** (2011.01)

(52) Cooperative Patent Classification (CPC):
**H04J 13/00; H04L 27/00**

(86) International application number:
**PCT/CN2022/130960**

(87) International publication number:
**WO 2024/098301 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **FENG, Qi
  Shenzhen, Guangdong 518129 (CN)**
• **WANG, Fan
  Shenzhen, Guangdong 518129 (CN)**
• **ZHANG, Zhang
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **SIGNAL TRANSMISSION METHOD AND APPARATUS**

(57)    This application provides a signal transmission method and apparatus, to reduce time-frequency resource overheads for signal transmission, improve spectral efficiency, and therefore, improve system performance. The method includes: determining a permutation complementary sequence set, where the permutation complementary sequence set includes M member sequences, the member sequence includes N member symbols, both M and N are integers greater than 1, the member symbol is obtained by performing a permutation operation on a parameter of the permutation complementary sequence set, the permutation operation is a single mapping operation in a finite domain, and the permutation complementary sequence set satisfies an aperiodic correlation; and sending a signal based on the permutation complementary sequence set.

FIG. 6

**Description**

**TECHNICAL FIELD**

This application relates to the field of communication technologies, and in particular, to a signal transmission method and apparatus.

**BACKGROUND**

With rapid development of wireless communication, a problem of interference from massive user access is faced in a wireless communication process, and a wireless communication system needs to have higher spectral efficiency to support massive user access. A sequence design is a key technology in the wireless communication system, and ideal autocorrelation and ideal cross-correlation properties of sequences are very important in wireless communication. The ideal autocorrelation property means that a value of a correlation between a sequence and any non-zero shift of the sequence is zero, and the ideal cross-correlation property means that a value of a correlation between any shifts of two sequences is zero.

A correlation of a sequence includes two forms: a periodic correlation and an aperiodic correlation. The periodic correlation means a cyclic shift correlation of a sequence, and an overlapping part of the sequence is always equal to a length of the sequence. The aperiodic correlation means a zero-padding shift correlation of a sequence, and an overlapping part of the sequence is usually less than a length of the sequence. For a periodic correlation sequence, there is a sequence having an ideal autocorrelation property, and there is a sequence having an ideal cross-correlation property, but there is no sequence having both the ideal autocorrelation property and the ideal cross-correlation property. For an existing aperiodic correlation sequence, there is neither a sequence having an ideal autocorrelation property, and nor a sequence having an ideal cross-correlation property.

In an existing standard protocol, uplink random access uses a periodic correlation property of a Zadoff-Chu sequence (or referred to as a ZC sequence), and uses a ZC sequence with a cyclic prefix to implement ideal autocorrelation. However, this causes large time-frequency resource overheads, and consequently causes low spectral efficiency.

**SUMMARY**

Embodiments of this application provide a signal transmission method and apparatus, to reduce time-frequency resource overheads for signal transmission, improve spectral efficiency, and therefore, improve system performance.

According to a first aspect, a signal transmission method is provided, including: determining a permutation complementary sequence set, where the permutation complementary sequence set includes $M$ member sequences, the member sequence includes $N$ member symbols, both $M$ and $N$ are integers greater than 1, the member symbol is obtained by performing a permutation operation on a parameter of the permutation complementary sequence set, the permutation operation is a single mapping operation in a finite domain, and the permutation complementary sequence set satisfies an aperiodic correlation; and sending a signal based on the permutation complementary sequence set.

According to the signal transmission method provided in this application, the single mapping operation in the finite domain is performed on the parameter of the permutation complementary sequence set, to obtain the member symbol of the permutation complementary sequence set, the member sequence in the permutation complementary sequence set is obtained based on the member symbol, and then the permutation complementary sequence set is determined based on the member sequence. The permutation complementary sequence set satisfies the aperiodic correlation. Because the permutation complementary sequence set satisfies the aperiodic correlation, a signal is sent by using the permutation complementary sequence set, and a transmitting end does not need to add a cyclic prefix when determining a to-be-sent signal. This can reduce time-frequency resource overheads for signal transmission, improve spectral efficiency, and therefore, improve system performance.

With reference to the first aspect, in some implementations of the first aspect, the parameter of the permutation complementary sequence set includes at least one of the following: a length $N$ of the member sequence in the permutation complementary sequence set, a quantity $M$ of member sequences, and a length $Z$ of a zero correlation zone in the permutation complementary sequence set, where $Z$ is an integer greater than or equal to 1.

With reference to the first aspect, in some implementations of the first aspect, a quantity of permutation complementary sequence sets is $\left(\dfrac{N \times M}{Z}\right) \times (Z-1)$, and the $l^{\text{th}}$ permutation complementary sequence set $\boldsymbol{s}^{[k][l]}$ in the $k^{\text{th}}$ group of permutation complementary sequence sets is represented as:

$$s^{[k][l]} = \begin{bmatrix} s_0^{[k][l]} \\ \mathbf{M} \\ s_{M-1}^{[k][l]} \end{bmatrix} = \begin{bmatrix} s_{0,0}^{[k][l]} & \mathbf{L} & s_{0,N-1}^{[k][l]} \\ \mathbf{M} & \mathbf{O} & \mathbf{M} \\ s_{M-1,0}^{[k][l]} & \mathbf{L} & s_{M-1,N-1}^{[k][l]} \end{bmatrix},$$

where

$N$ is greater than or equal to $M$, $M$ is greater than or equal to $Z$, $M$ is divisible by $Z$, $k \in \{1,2,...,Z\text{-}1\}$, and $l \in \left\{0,1,...,\dfrac{N \times M}{Z}-1\right\}$. The $n^{\text{th}}$ member symbol $s_{m,n}^{[k][l]}$ in the $m^{\text{th}}$ member sequence in the permutation complementary sequence set $s^{[k][l]}$ is represented as:

$$s_{m,n}^{[k][l]} = e^{j \times \left[ \frac{2\pi}{N} \times n \times \Gamma\left( \left\lfloor \frac{l \times Z}{M} \right\rfloor \right) + \frac{2\pi}{M} \times Z \times p \times \Xi\left( l \bmod \frac{M}{Z} \right) + \frac{2\pi}{Z} \times k \times q \times \Pi\left( n \bmod Z \right) \right]},$$

where

$m = p \times Z + q$, $p \in \left\{0,1,...,\dfrac{M}{Z}-1\right\}$, $q \in \{0,1,...,Z\text{-}1\}$, $n \in \{0,1,...,N\text{-}1\}$, $\Gamma : Z_N \to Z_N$ represents a permutation operation in a finite field $Z_N$, $\Xi : Z_{\frac{M}{Z}} \to Z_{\frac{M}{Z}}$ represents a permutation operation in a finite field $Z_{\frac{M}{Z}}$, and $\Pi : Z_z \to Z_z$ represents a permutation operation in a finite field $Z_z$.

The permutation complementary sequence set obtained in this embodiment of this application satisfies the aperiodic correlation, the signal is sent by using the permutation complementary sequence set, and the transmitting end does not need to add a cyclic prefix when determining a to-be-sent signal. This can reduce time-frequency resource overheads for signal transmission, improve spectral efficiency, and therefore, improve system performance.

With reference to the first aspect, in some implementations of the first aspect, $N = M = Z$.

Compared with a ZC sequence, a cyclic prefix does not need to be added to the permutation complementary sequence set obtained in this embodiment of this application. This reduces overheads and improves spectral efficiency, and further improves a sequence capacity.

With reference to the first aspect, in some implementations of the first aspect, $N > M = Z$.

The sequence obtained in this implementation reduces overheads and improves spectral efficiency, and further improves a sequence capacity, so that a signal detection capability of a receiving end can be improved in a scenario in which noise is large or in a scenario in which the receiving end has a high requirement for signal detection performance.

With reference to the first aspect, in some implementations of the first aspect, $N > M > Z$.

The sequence obtained in this implementation reduces overheads and improves spectral efficiency, and is also applicable to a multi-user access scenario.

With reference to the first aspect, in some implementations of the first aspect, the permutation complementary sequence set is a partial sequence set in a candidate permutation complementary sequence set, a quantity of candidate permutation complementary sequence sets is $\left(\dfrac{N \times M}{Z}\right) \times (Z-1)$, and the $l^{\text{th}}$ permutation complementary sequence set $s^{[k][l]}$ in the $k^{\text{th}}$ group of permutation complementary sequence sets is represented as:

$$s^{[k][l]} = \begin{bmatrix} s_0^{[k][l]} \\ \mathbf{M} \\ s_{M-1}^{[k][l]} \end{bmatrix} = \begin{bmatrix} s_{0,0}^{[k][l]} & \mathbf{L} & s_{0,N-1}^{[k][l]} \\ \mathbf{M} & \mathbf{O} & \mathbf{M} \\ s_{M-1,0}^{[k][l]} & \mathbf{L} & s_{M-1,N-1}^{[k][l]} \end{bmatrix},$$

where

$N > M > Z$, $M$ is divisible by $Z$, $k \in \{1,2,...,Z\text{-}1\}$, and $l \in \left\{ 0,1,\ldots,\dfrac{N \times M}{Z} - 1 \right\}$. The $n^{\text{th}}$ member symbol $s_{m,n}^{[k][l]}$ in the $m^{\text{th}}$ member sequence in the permutation complementary sequence set $s^{[k][l]}$ is represented as:

$$s_{m,n}^{[k][l]} = e^{j \times \left[ \frac{2\pi}{N} \times n \times \Gamma\left( \left\lfloor \frac{l \times Z}{M} \right\rfloor \right) + \frac{2\pi}{M} \times Z \times p \times \Xi\left( l \bmod \frac{M}{Z} \right) + \frac{2\pi}{Z} \times k \times q \times \Pi(n \bmod Z) \right]},$$

where

$m = p \times Z + q$, $p \in \left\{ 0,1,\ldots,\dfrac{M}{Z} - 1 \right\}$, $q \in \{0,1,...,Z\text{-}1\}$, $n \in \{0,1,...,N\text{-}1\}$, $\Gamma : Z_N \to Z_N$ represents a permutation operation in a finite field $Z_N$, $\Xi : Z_{\frac{M}{Z}} \to Z_{\frac{M}{Z}}$ represents a permutation operation in a finite field $Z_{\frac{M}{Z}}$, and $\Pi : Z_z \to Z_z$ represents a permutation operation in a finite field $Z_z$.

In this embodiment of this application, the transmitting end may not need to add a cyclic prefix to the permutation complementary sequence set obtained by restricting an intra-group sequence set index number of the candidate permutation complementary sequence set. This reduces overheads and improves spectral efficiency, further improves a sequence capacity, and is applicable to a high-speed movement communication scenario.

With reference to the first aspect, in some implementations of the first aspect, the permutation complementary sequence set is a sequence set that is in the candidate permutation complementary sequence set and whose $l$ belongs to the following set:

$$l \in \left\{ \dfrac{(2f+1) \times M}{Z} \times i + j \;\middle|\; i = 0,1,\ldots,\dfrac{N}{2f+1} - 1, \; j = 0,1,\ldots,\dfrac{M}{Z} - 1 \right\},$$

where

$f$ is a positive integer.

According to the permutation complementary sequence set obtained in this embodiment of this application, a quantity of permutation complementary sequence sets in the group is close to 1/3 of the quantity of candidate permutation complementary sequence sets. Compared with a restricted set of a ZC sequence, this helps increase a quantity of valid sequence sets, improves a sequence capacity, and is applicable to a high-speed movement communication scenario.

With reference to the first aspect, in some implementations of the first aspect, the sending a signal based on the permutation complementary sequence set includes: determining a target permutation complementary sequence set from the permutation complementary sequence set; and mapping the target permutation complementary sequence set to $N$ member symbols and $M$ subcarriers, to generate the signal; and sending the signal.

With reference to the first aspect, in some implementations of the first aspect, the sending a signal based on the permutation complementary sequence set includes: sending, by a terminal device, a random access signal to a network device based on the permutation complementary sequence set.

With reference to the first aspect, in some implementations of the first aspect, the length $N$ of the member sequence and the quantity $M$ of member sequences are sent by the network device to the terminal device, or are agreed on in a protocol.

According to a second aspect, a signal transmission apparatus is provided. The apparatus may be a terminal device or a network device, or may be an apparatus (for example, a chip, a chip system, or a circuit) in the terminal device or the network device, or may be an apparatus that can be used together with the terminal device or the network device.

**In** a possible implementation, the apparatus may include modules or units that one to one correspond to the methods/operations/steps/actions described in the first aspect. The modules or units may be hardware circuits or software, or may be implemented by a hardware circuit in combination with software.

In a possible implementation, the apparatus includes: a processing unit, configured to determine a permutation complementary sequence set, where the permutation complementary sequence set includes $M$ member sequences, the member sequence includes $N$ member symbols, both $M$ and $N$ are integers greater than 1, the member symbol is obtained by performing a permutation operation on a parameter of the permutation complementary sequence set, the permutation operation is a single mapping operation in a finite domain, and the permutation complementary sequence set satisfies an aperiodic correlation; and a transceiver unit, configured to send a signal based on the permutation complementary sequence set.

With reference to the second aspect, in some implementations of the second aspect, the parameter of the permutation complementary sequence set includes at least one of the following: a length $N$ of the member sequence in the permutation complementary sequence set, a quantity $M$ of member sequences, and a length $Z$ of a zero correlation zone in the permutation complementary sequence set, where $Z$ is an integer greater than or equal to 1.

With reference to the second aspect, in some implementations of the second aspect, a quantity of permutation complementary sequence sets is $\left(\dfrac{N \times M}{Z}\right) \times (Z-1)$, and the $l^{\text{th}}$ permutation complementary sequence set $\boldsymbol{s}^{[k][l]}$ in the $k^{\text{th}}$ group of permutation complementary sequence sets is represented as:

$$\boldsymbol{s}^{[k][l]} = \begin{bmatrix} \boldsymbol{s}_0^{[k][l]} \\ \mathrm{M} \\ \boldsymbol{s}_{M-1}^{[k][l]} \end{bmatrix} = \begin{bmatrix} s_{0,0}^{[k][l]} & \mathrm{L} & s_{0,N-1}^{[k][l]} \\ \mathrm{M} & \mathrm{O} & \mathrm{M} \\ s_{M-1,0}^{[k][l]} & \mathrm{L} & s_{M-1,N-1}^{[k][l]} \end{bmatrix},$$

where

$N$ is greater than or equal to $M$, $M$ is greater than or equal to $Z$, $M$ is divisible by $Z$, $k \in \{1,2,...,Z\text{-}1\}$, and $l \in \left\{0,1,...,\dfrac{N \times M}{Z}-1\right\}$. The $n^{\text{th}}$ member symbol $s_{m,n}^{[k][l]}$ in the $m^{\text{th}}$ member sequence in the permutation complementary sequence set $\boldsymbol{s}^{[k][l]}$ is represented as:

$$s_{m,n}^{[k][l]} = e^{j \times \left[ \frac{2\pi}{N} \times n \times \Gamma\left( \left\lfloor \frac{l \times Z}{M} \right\rfloor \right) + \frac{2\pi}{M} \times Z \times p \times \Xi\left( l \bmod \frac{M}{Z} \right) + \frac{2\pi}{Z} \times k \times q \times \Pi\left( n \bmod Z \right) \right]},$$

where

$m = p \times Z + q$, $p \in \left\{0,1,...,\dfrac{M}{Z}-1\right\}$, $q \in \{0,1...,Z\text{-}1\}$, $n \in \{0,1...,N\text{-}1\}$, $\Gamma : Z_N \to Z_N$ represents a permutation operation in a finite field $Z_N$, $\Xi : Z_{\frac{M}{Z}} \to Z_{\frac{M}{Z}}$ represents a permutation operation in a finite field $Z_{\frac{M}{Z}}$, and $\Pi : Z_Z \to Z_Z$ represents a permutation operation in a finite field $Z_Z$.

With reference to the second aspect, in some implementations of the second aspect, $N = M = Z$.
With reference to the second aspect, in some implementations of the second aspect, $N > M = Z$.
With reference to the second aspect, in some implementations of the second aspect, $N > M > Z$.
With reference to the second aspect, in some implementations of the second aspect, the permutation complementary sequence set is a partial sequence set in a candidate permutation complementary sequence set, a quantity of candidate permutation complementary sequence sets is $\left(\dfrac{N \times M}{Z}\right) \times (Z-1)$, and the $l^{\text{th}}$ permutation complementary sequence set $\boldsymbol{s}^{[k][l]}$ in the $k^{\text{th}}$ group of permutation complementary sequence sets is represented as:

$$\boldsymbol{s}^{[k][l]} = \begin{bmatrix} \boldsymbol{s}_0^{[k][l]} \\ \mathbf{M} \\ \boldsymbol{s}_{M-1}^{[k][l]} \end{bmatrix} = \begin{bmatrix} s_{0,0}^{[k][l]} & \mathrm{L} & s_{0,N-1}^{[k][l]} \\ \mathbf{M} & \mathrm{O} & \mathbf{M} \\ s_{M-1,0}^{[k][l]} & \mathrm{L} & s_{M-1,N-1}^{[k][l]} \end{bmatrix},$$

where

$N > M > Z$, $M$ is divisible by $Z$, $k \in \{1,2,...,Z\text{-}1\}$, and $l \in \left\{ 0,1,...,\dfrac{N \times M}{Z} - 1 \right\}$. The $n^{\text{th}}$ member symbol $s_{m,n}^{[k][l]}$ in the $m^{\text{th}}$ member sequence in the permutation complementary sequence set $\boldsymbol{s}^{[k][l]}$ is represented as:

$$s_{m,n}^{[k][l]} = e^{j \times \left[ \frac{2\pi}{N} \times n \times \Gamma\left( \left\lfloor \frac{l \times Z}{M} \right\rfloor \right) + \frac{2\pi}{M} \times Z \times p \times \Xi\left( l \bmod \frac{M}{Z} \right) + \frac{2\pi}{Z} \times k \times q \times \Pi\left( n \bmod Z \right) \right]},$$

where

$m = p \times Z + q$, $p \in \left\{ 0,1,...,\dfrac{M}{Z} - 1 \right\}$, $q \in \{0,1,...,Z\text{-}1\}$, $n \in \{0,1,...,N\text{-}1\}$, $\Gamma{:}Z_N \to Z_N$ represents a permutation operation in a finite field $Z_N$, $\Xi: Z_{\frac{M}{Z}} \to Z_{\frac{M}{Z}}$ represents a permutation operation in a finite field $Z_{\frac{M}{Z}}$, and $\Pi{:}Z_Z \to Z_Z$ represents a permutation operation in a finite field $Z_Z$.

With reference to the second aspect, in some implementations of the second aspect, the permutation complementary sequence set is a sequence set that is in the candidate permutation complementary sequence set and whose $l$ belongs to the following set:

$$l \in \left\{ \frac{(2f+1) \times M}{Z} \times i + j \;\middle|\; i = 0,1,...,\frac{N}{2f+1} - 1, j = 0,1,...,\frac{M}{Z} - 1 \right\},$$

where
$f$ is a positive integer.

With reference to the second aspect, in some implementations of the second aspect, the processing unit is further configured to: determine a target permutation complementary sequence set from the permutation complementary sequence set; and map the target permutation complementary sequence set to $N$ member symbols and $M$ subcarriers, to generate a signal; and the transceiver unit is further configured to send the signal.

With reference to the second aspect, in some implementations of the second aspect, the transceiver unit is further configured to send a random access signal to a network device based on the permutation complementary sequence set.

With reference to the second aspect, in some implementations of the second aspect, the length $N$ of the member sequence and the quantity $M$ of member sequences are sent by the network device to the apparatus, or are agreed on in a protocol.

According to a third aspect, a signal transmission apparatus is provided. The apparatus includes a processor, the processor is coupled to a memory, the memory is configured to store a computer program, and when the processor invokes the computer program, the apparatus is enabled to perform the method in any possible implementation of the first aspect.

Optionally, there are one or more processors, and there are one or more memories.

Optionally, the memory and the processor may be integrated together, or the memory and the processor may be separately disposed.

**In** a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of continuation data request information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The apparatus according to the third aspect may be a chip. The processor may be implemented by using hardware or software. When the processor is implemented by using hardware, the processor may be a logic circuit, an integrated circuit, or the like. When the processor is implemented by using software. The processor may be a general purpose processor, and is implemented by reading software code stored in the memory. The memory may be integrated into the processor, or may exist independently outside the processor.

According to a fourth aspect, a computer-readable storage medium is provided. The computer-readable storage medium stores a computer program (or referred to as code or instructions). When the computer program runs on a computer, the computer performs the method in any possible implementation of the first aspect.

According to a fifth aspect, a computer program product is provided. The computer program product includes a computer program (or referred to as code or instructions). When the computer program is run, a computer is enabled to perform the method in any possible implementation of the first aspect.

According to a sixth aspect, a communication system is provided, including a terminal device and a network device. The terminal device or the network device is configured to implement the method in any one of the first aspect or the possible implementations of the first aspect.

## BRIEF DESCRIPTION OF DRAWINGS

FIG. 1 is a diagram of a communication system to which an embodiment of this application is applied;
FIG. 2 is a diagram of periodic correlation sequences according to an embodiment of this application;
FIG. 3 is a diagram of aperiodic correlation sequences according to an embodiment of this application;
FIG. 4 is a diagram of a time-frequency resource configuration format of a physical random access channel according to an embodiment of this application;
FIG. 5 is a diagram of a time-frequency resource configuration format of another physical random access channel according to an embodiment of this application;
FIG. 6 is a schematic flowchart of a signal transmission method according to an embodiment of this application;
FIG. 7 is a diagram of a cross-correlation property of permutation complementary sequence sets according to an embodiment of this application;
FIG. 8 is another diagram of a cross-correlation property of permutation complementary sequence sets according to an embodiment of this application;
FIG. 9 is still another diagram of a cross-correlation property of permutation complementary sequence sets according to an embodiment of this application;
FIG. 10 is a diagram of comparison between a ZC sequence and a candidate permutation complementary sequence set using a restricted set to combat frequency offset according to an embodiment of this application;
FIG. 11 is a block diagram of a signal transmission apparatus according to an embodiment of this application; and
FIG. 12 is a block diagram of another signal transmission apparatus according to an embodiment of this application.

## DESCRIPTION OF EMBODIMENTS

The following describes technical solutions of this application with reference to accompanying drawings.

In embodiments of this application, words such as "first" and "second" are used to distinguish between same items or similar items having basically same functions and roles. A person skilled in the art may understand that the terms such as "first" and "second" do not limit a quantity or an execution sequence, and the terms such as "first" and "second" do not indicate a definite difference.

It should be noted that, in embodiments of this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system, a new radio (new radio, NR) system or another evolved communication system, and a next-generation mobile communication system of a 5G communication system.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some examples of the terminal device include: a mobile phone (mobile phone), a tablet computer, a notebook computer, a palmtop computer, a mobile internet device (mobile internet device, MID), a wearable device, an unmanned aerial vehicle, a robot, a smart point of sale (point of sale, POS) machine, customer-premises equipment (customer-premises equipment, CPE), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in this application.

By way of example, and not limitation, in this application, the terminal device may be a terminal device in an internet of things (internet of things, IoT) system. The internet of things is an important part of the future information technology development. Its main technical feature is to connect articles and networks through communication technology, to implement an intelligent network of man-machine interconnection and interconnection of things. For example, the terminal device in embodiments of this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or accessories of a user. Wearable devices are not only hardware devices, and can implement powerful functions through software support, data interaction, and cloud interaction. In a broad sense, the wearable intelligent device includes full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

By way of example, and not limitation, in embodiments of this application, the terminal device may alternatively be a terminal device in machine type communication (machine type communication, MTC). In addition, the terminal device may alternatively be an in-vehicle module, an in-vehicle assembly, an in-vehicle component, an in-vehicle chip, an in-vehicle unit, or the like built as one or more parts or units in a vehicle. The vehicle may implement the method provided in this application by using the built-in in-vehicle module, in-vehicle assembly, in-vehicle component, in-vehicle chip, in-vehicle unit, or the like. Therefore, embodiments of this application may also be applied to an internet of vehicles, for example, a vehicle to everything (vehicle to everything, V2X), a long term evolution-vehicle technology (long term evolution-vehicle, LTE-V), or a vehicle-to-vehicle (vehicle-to-vehicle, V2V) technology.

The network device in this application may be a device that communicates with the terminal device. The network device may also be referred to as an access network device or a radio access network device, and may be a transmission reception point (transmission reception point, TRP), or may be an evolved NodeB (evolved NodeB, eNB or eNodeB) in an LTE system, or may be a home NodeB (for example, a home evolved NodeB, or a home NodeB, HNB), or a base band unit (base band unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the network device may be a metro base station, a micro base station, a pico base station, a femto base station, or the like. This is not limited in this application.

In a network structure, the network device may include a central unit (central unit, CU) node, a distributed unit (distributed unit, DU) node, or a radio access network (radio access network, RAN) device including a CU node and a DU node, or a RAN device including a control plane CU node (CU-CP node), a user plane CU node (CU-UP node), and a DU node.

The network device provides a service for a cell, and the terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service.

In embodiments of this application, the terminal device or the network device may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that communication can be performed according to the method provided in embodiments of this application. For example, the method provided in embodiments of this application may be performed by the terminal device, the network device, or a functional module that can execute a program in the terminal device or the network device.

In addition, aspects or features in embodiments of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk drive, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, contain and/or carry instructions and/or data.

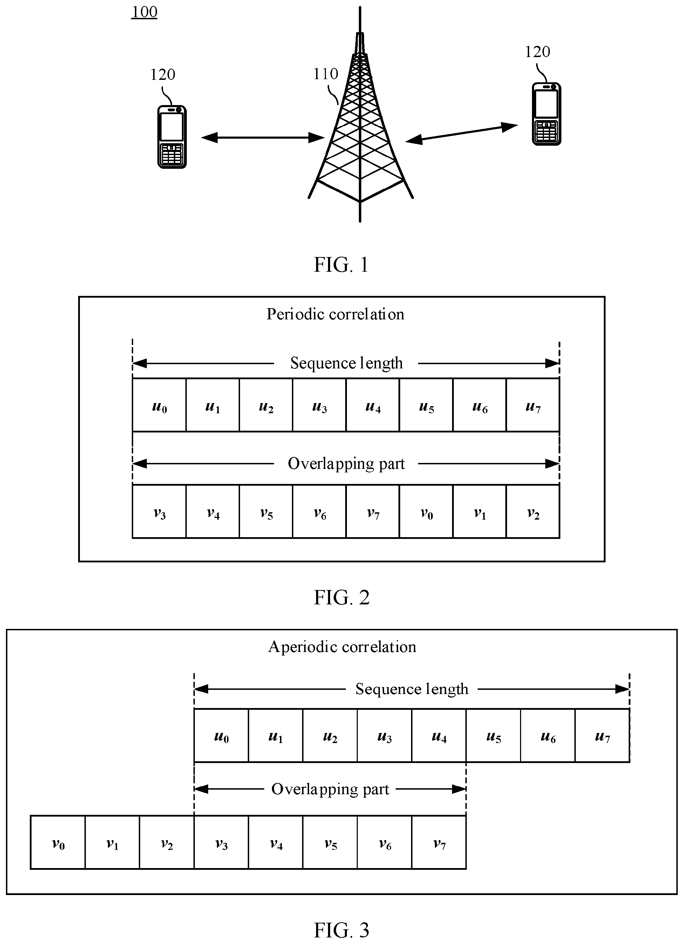

For ease of understanding embodiments of this application, a communication system applicable to embodiments of this application is first described in detail with reference to FIG. 1.

FIG. 1 shows a communication system 100 to which an embodiment of this application can be applied. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 through a wireless link. A plurality of antennas may be configured for each communication device, for example, the network device 110 or the terminal device 120. The plurality of antennas may include at least one transmit antenna configured to send a signal and at least one receive antenna configured to receive a signal. In addition, each communication device further includes a transmitter chain and a receiver chain. A person of ordinary skill in the art may understand that each of the transmitter chain and the receiver chain may include a plurality of components (for example, a processor, a modulator, multiplexer, a demodulator, a demultiplexer, or an antenna) related to signal sending and signal receiving. Therefore, the network device 110 and the terminal device 120 may communicate with each other by using a multi-antenna technology.

FIG. 1 shows one network device and two terminal devices as an example. Optionally, the communication system 100 may include a plurality of network devices, and another quantity of terminal devices may be included in a coverage area of each network device. This is not limited in embodiments of this application.

For ease of understanding, terms used in embodiments of this application are first briefly described.

1. Periodic correlation: a cyclic shift correlation of sequences. An overlapping part of the sequences is always equal to a length of the sequences. A sequence $u$ and a sequence $v$ are sequences with lengths $N$, $u = [u_0, u_1, ..., u_{N-1}]$, $v = [v_0, v_1, ..., v_{N-1}]$, and a periodic correlation function of the sequence $u$ and the sequence $v$ is:

$$R_{uv}(\tau) = \sum_{t=0}^{N-1} u_t v^*_{(t+\tau)\bmod N},$$

where

mod is a modulo operation, $v^*$ is a conjugate of the complex number $v$, and $\tau$ is a delay of the sequence V.
FIG. 2 is a diagram of periodic correlation sequences. As shown in FIG. 2, a sequence $u = [u_0, u_1, u_2, u_3, u_4, u_5, u_6, u_7]$, a sequence $v = [v_0, v_1, v_2, v_3, v_4, v_5, v_6, v_7]$, lengths $N$ of the two sequences are 8, and a delay of the sequence $v$ is 3. An overlapping part of the sequence $u$ and the sequence $v$ is always equal to the sequence length 8, and a periodic correlation function between the sequence $u$ and the sequence $v$ is:

$$R_{uv}(3) = \sum_{t=0}^{7} u_t v^*_{(t+3)\bmod 8},$$

where
mod is a modulo operation, $v^*$ is a conjugate of the complex number $v$, and $\tau$ is a delay of the sequence V.

2. Aperiodic correlation: a zero-padding shift correlation of sequences. An overlapping part of the sequences is usually less than a length of the sequences. A sequence $u$ and a sequence $v$ are sequences with lengths $N$, $u = [u_0, u_1, ..., u_{N-1}]$, $v = [v_0, v_1, ..., v_{N-1}]$, and a periodic correlation function of the sequence $u$ and the sequence $v$ is:

$$R_{uv}(\tau) = \begin{cases} \sum_{t=0}^{N-1-\tau} u_t v^*_{t+\tau}, & 0 \leq \tau \leq N-1 \\ \sum_{t=0}^{N-1+\tau} u_{t-\tau} v^*_t, & -N+1 \leq \tau < 0 \end{cases},$$

where

mod is a modulo operation, $v^*$ is a conjugate of the complex number $v$, and $\tau$ is a delay of the sequence V.
FIG. 3 is a diagram of aperiodic correlation sequences. As shown in FIG. 3, a sequence $u = [u_0, u_1, u_2, u_3, u_4, u_5, u_6, u_7]$, a receiving sequence $v = [v_0, v_1, v_2, v_3, v_4, v_5, v_6, v_7]$, lengths $N$ of the two sequences are 8, and a delay of the sequence $v$ is 3. An overlapping part of the sequence $u$ and the sequence $v$ is always less than the sequence length 8, and an aperiodic correlation function between the sequence $u$ and the sequence $v$ is:

$$R_{uv}(3) = \sum_{t=0}^{4} u_t v^*_{t+3}.$$

3. An ideal autocorrelation property: means that a value of a correlation between a sequence and any non-zero shift of the sequence is zero.
4. An ideal cross-correlation property: means that a value of a correlation between any shifts of two sequences is zero.
5. Complementary sequence set: means that a sum of autocorrelation functions of all member sequences in the sequence set satisfies an ideal autocorrelation property.

With rapid development of wireless communication, a problem of interference from massive user access is faced in a wireless communication process, and a wireless communication system needs to have higher spectral efficiency to support massive user access. A sequence design is a key technology in the wireless communication system, and ideal autocorrelation and ideal cross-correlation properties of sequences are very important in wireless communication. For a periodic correlation sequence, there is a sequence having an ideal autocorrelation property, and there is a sequence having an ideal cross-correlation property, but there is no sequence having both the ideal autocorrelation property and the ideal cross-correlation property. For an existing aperiodic correlation sequence, there is neither a sequence having an ideal autocorrelation property, and nor a sequence having an ideal cross-correlation property.
In an existing standard protocol, uplink random access uses a periodic correlation property of a ZC sequence, and uses a ZC sequence with a cyclic prefix to implement ideal autocorrelation. However, this causes large time-frequency resource overheads, and consequently causes low spectral efficiency.

Specifically, when a terminal device wants to perform data transmission with a network device in a cell, the terminal device needs to access the network device. In an existing standard protocol, uplink random access uses a periodic correlation property of a ZC sequence, and uses a ZC sequence with a cyclic prefix to implement ideal autocorrelation.

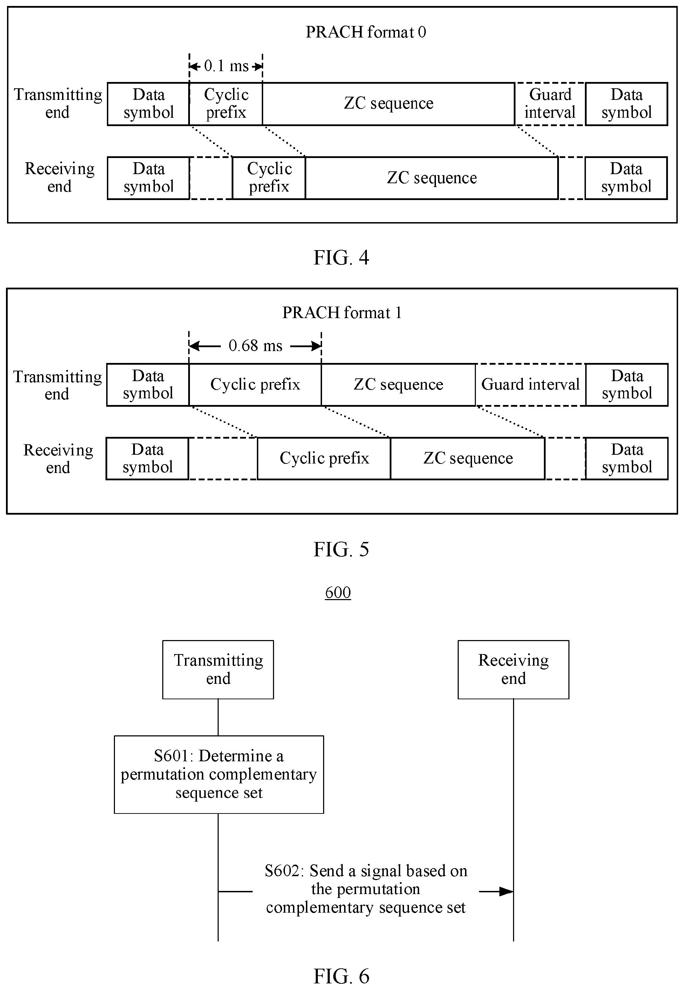

FIG. 4 and FIG. 5 show physical random access channel (physical random access channel, PRACH) time-frequency resource configuration formats (PRACH format for short). In FIG. 4 and FIG. 5, the first row is a PRACH format at a transmitting end, and the transmitting end sends a signal. Correspondingly, a receiving end receives the signal, and the second row indicates that the sent signal arrives at the receiving end after a period of time. The terminal device sends, through a PRACH channel, an uplink signal including a preamble sequence. Different preamble sequences are transmitted through PRACH time-frequency resources in different configuration formats. That is, different preamble sequences correspond to different PRACH time-frequency resource configuration formats. The preamble sequence includes a cyclic prefix, a ZC sequence part, and a guard interval in a PRACH time-frequency resource configuration. Different preamble sequences are configured with different cyclic prefixes on a PRACH time-frequency resource, and therefore cell coverage radii are also different.

For example, a calculation manner of a cell coverage radius r is:

$$r = \frac{t_{CP} \times c}{2},$$

where

$t_{CP}$ is overheads of a cyclic prefix, and C is the speed of light.

When a cell radius is greater than or equal to a preset value, to ensure an ideal autocorrelation property of a ZC sequence, and ensure a periodic correlation of an overlapping part of a sequence of a receiving end and a sequence of a transmitting end when the receiving end receives a signal, no interference is generated between the sequence part of the receiving end and another data symbol. A PRACH format with a large cyclic prefix is used to implement random access. In an extreme case, time-frequency resources of the cyclic prefix, the ZC sequence part, and the guard interval part of the access preamble need to be set to equal.

For example, a PRACH format shown in FIG. 4 is a PRACH format 0, and a cyclic prefix $t_{CP}$ of a random access preamble sequence corresponding to the PRACH format 0 is 0.1 ms. A PRACH format shown in FIG. 5 is a PRACH format 1, and a cyclic prefix $t_{CP}$ of a random access preamble sequence corresponding to the PRACH format 1 is 0.68 ms. According to the foregoing formula for calculating the cell coverage radius, it can be learned that a cell radius corresponding to the cyclic prefix $t_{CP}$ that is 0.1 ms is 15 km. That is, a preset value of the cell radius is 15 km. If a cell radius is greater than or equal to 15 km, the PRACH format 1 with a large cyclic prefix is used for random access. In this case, the cyclic prefix $t_{CP}$ of the random access preamble sequence is 0.68 ms, and the cyclic prefix occupies large overheads. This causes large time-frequency resource overheads, and causes low spectral efficiency.

To resolve the foregoing technical problem, this application proposes a signal transmission method and apparatus. A single mapping operation in a finite domain is performed on a parameter of a permutation complementary sequence set, to obtain a member symbol of the permutation complementary sequence set, a member sequence in the permutation complementary sequence set is obtained based on the member symbol, and then the permutation complementary sequence set is determined based on the member sequence. The permutation complementary sequence set satisfies an aperiodic correlation. Because the permutation complementary sequence set satisfies the aperiodic correlation, a signal is sent by using the permutation complementary sequence set, and a transmitting end does not need to add a cyclic prefix when determining a to-be-sent signal. This can reduce time-frequency resource overheads for signal transmission, improve spectral efficiency, and therefore, improve system performance.

The following uses specific embodiments to describe in detail the technical solutions of this application and how to resolve the foregoing technical problem in the technical solutions of this application. The following several specific embodiments may be implemented independently, or may be combined with each other. A same or similar concept or process may not be described again in some embodiments.

Embodiments of this application may be applied to a plurality of different scenarios, including but not limited to the scenario shown in FIG. 1. For example, for uplink transmission, the terminal device may be used as a transmitting end, and the network device may be used as a receiving end. For downlink transmission, the network device may be used as a transmitting end, and the terminal device may be used as a receiving end. For another transmission scenario, for example, for data transmission between terminal devices, one terminal device may be used as a transmitting end, and the other terminal device may be used as a receiving end. For another example, for uplink transmission between network devices, one network device may be used as a transmitting end, and the other network device may be used as a receiving end.

Therefore, the following describes embodiments of this application based on the transmitting end and the receiving end.

It should be understood that the transmitting end may be replaced with an apparatus or a chip that can implement a function similar to that of the transmitting end, and the receiving end may also be replaced with an apparatus or a chip that can implement a function similar to that of the receiving end. A name of the apparatus or the chip is not limited in embodiments of this application.

FIG. 6 is a schematic flowchart of a signal transmission method 600 according to an embodiment of this application. The method 600 may be applied to the communication system 100 shown in FIG. 1, but this embodiment of this application is not limited thereto. As shown in FIG. 6, the method 600 may include the following steps.

S601: A transmitting end determines a permutation complementary sequence set, where the permutation complementary sequence set includes $M$ member sequences, each of the $M$ member sequences includes $N$ member symbols, and both $M$ and $N$ are integers greater than 1. Each of the $N$ member symbols is obtained by performing a permutation operation on a parameter of the permutation complementary sequence set, the permutation operation is a single mapping operation in a finite domain, and the permutation complementary sequence set satisfies an aperiodic correlation.

Optionally, the parameter of the permutation complementary sequence set includes at least one of the following: a length $N$ of the member sequence in the permutation complementary sequence set, a quantity $M$ of member sequences, and a length $Z$ of a zero correlation zone in the permutation complementary sequence set. $Z$ is an integer greater than or equal to 1.

There may be one or more permutation complementary sequence sets. This is not limited in this embodiment of this application.

**In** a possible implementation, the transmitting end may specifically determine the permutation complementary sequence set in the following manner: The transmitting end performs a permutation operation on a parameter of the permutation complementary sequence set, to determine one member symbol, and the transmitting end may perform the determining manner $N$ times, to obtain $N$ member symbols. The transmitting end determines one member sequence based on the $N$ member symbols, and the transmitting end may perform the determining manner $M$ times, to obtain $M$ member sequences. Finally, the transmitting end may determine one permutation complementary sequence set based on the $M$ member sequences.

It should be understood that the foregoing permutation complementary sequence set is determined by the transmitting end. In some possible implementations, the permutation complementary sequence set may also be agreed in a protocol, or may be prestored, or may be sent by a receiving end to the transmitting end in advance. This is not limited in this application.

S602: The transmitting end sends a signal based on the permutation complementary sequence set. Correspondingly, the receiving end receives the signal from the transmitting end.

Optionally, the sending a signal based on the permutation complementary sequence set includes: determining a target permutation complementary sequence set from the permutation complementary sequence set; and mapping the target permutation complementary sequence set to $N$ member symbols and $M$ subcarriers, to generate the signal, and sending the signal. The $M$ member sequences in the permutation complementary sequence set use frequency division multiplexing, and the $N$ member symbols of the member sequence use time division multiplexing.

For example, when there are a plurality of permutation complementary sequence sets, the transmitting end may select one permutation complementary sequence set from the permutation complementary sequence sets, determine the permutation complementary sequence set as the target permutation complementary sequence set, generate the signal by using the target permutation complementary sequence set, and send the signal.

It should be understood that the receiving end may determine the plurality of permutation complementary sequence sets in a same manner as the transmitting end. After the receiving end receives the signal from the transmitting end, the receiving end may search the plurality of permutation complementary sequence sets, and perform aperiodic correlation processing on the received signal and the plurality of local permutation complementary sequence sets, to determine the target permutation complementary sequence set used by the transmitting end to send the signal.

According to the signal transmission method provided in this embodiment of this application, the single mapping operation in the finite domain is performed on the parameter of the permutation complementary sequence set, to obtain the member symbol of the permutation complementary sequence set, the member sequence in the permutation complementary sequence set is obtained based on the member symbol, and then the permutation complementary sequence set is determined based on the member sequence. The permutation complementary sequence set satisfies the aperiodic correlation. Because the permutation complementary sequence set satisfies the aperiodic correlation, a signal is sent by using the permutation complementary sequence set, and the transmitting end does not need to add a cyclic prefix when determining a to-be-sent signal. This can reduce time-frequency resource overheads for signal transmission, improve spectral efficiency, and therefore, improve system performance.

Optionally, a quantity of permutation complementary sequence sets is $\left(\dfrac{N \times M}{Z}\right) \times (Z-1)$, there are Z -1 groups in total, and each group has $\dfrac{N \times M}{Z}$ permutation complementary sequence sets. The $l^{th}$ permutation complementary sequence set $\boldsymbol{s}^{[k][l]}$ in the $k^{th}$ group of permutation complementary sequence sets is represented as:

$$\boldsymbol{s}^{[k][l]} = \begin{bmatrix} \boldsymbol{s}_0^{[k][l]} \\ \mathbf{M} \\ \boldsymbol{s}_{M-1}^{[k][l]} \end{bmatrix} = \begin{bmatrix} s_{0,0}^{[k][l]} & \mathbf{L} & s_{0,N-1}^{[k][l]} \\ \mathbf{M} & \mathbf{O} & \mathbf{M} \\ s_{M-1,0}^{[k][l]} & \mathbf{L} & s_{M-1,N-1}^{[k][l]} \end{bmatrix},$$

where
N is the length of the member sequence in the permutation complementary sequence set, M is the quantity of member sequences in the permutation complementary sequence set, Z is the length of the zero correlation zone of the permutation complementary sequence set, and l is an intra-group index number of a quantity of members of the permutation complementary sequence set. N is greater than or equal to M, M is greater than or equal to Z, M is divisible by Z, $k \in$ {1,2,...,Z-1}, and $l \in \left\{0,1,\ldots,\dfrac{N \times M}{Z}-1\right\}$.

In a possible mapping, the mapping the target permutation complementary sequence set to M subcarriers may be specifically: mapping M rows of elements in a matrix $\boldsymbol{s}^{[k][l]}$ to the M subcarriers. For example, an index (or a number) of a subcarrier is 0 ~ M-1. The mapping may be specifically: mapping an element in the 0th row to the 0th subcarrier, mapping an element in the 1st row to the 1st subcarrier, and so on, mapping an element in the M-1th row to the M-1th subcarrier. The mapping the target permutation complementary sequence set to N member symbols may be specifically: mapping N columns of elements in the matrix $\boldsymbol{s}^{[k][l]}$ to the N member symbols. For example, an index (or a number) of a member symbol is 0 ~ N-1. The mapping may be specifically: mapping an element in the 0th column to the 0th member symbol, mapping an element in the 1st column to the 1st member symbol, and so on, mapping an element in the N -1 th column to the N -1th member symbol.

The $n^{th}$ member symbol $s_{m,n}^{[k][l]}$ in the $m^{th}$ member sequence in the permutation complementary sequence set $\boldsymbol{s}^{[k]}$

[l] may be obtained by separately performing a permutation operation on a parameter $\left\lfloor \dfrac{l \times Z}{M} \right\rfloor$ in a finite field $Z_N$, on a

parameter $l \bmod \dfrac{M}{Z}$ in a finite field $Z_{\frac{M}{Z}}$, and on a parameter n mod Z in a finite field $Z_Z$, and may be specifically represented by using the following formula:

$$s_{m,n}^{[k][l]} = e^{\, j \times \left[ \frac{2\pi}{N} \times n \times \Gamma\left(\left\lfloor \frac{l \times Z}{M} \right\rfloor\right) + \frac{2\pi}{M} \times Z \times p \times \Xi\left(l \bmod \frac{M}{Z}\right) + \frac{2\pi}{Z} \times k \times q \times \Pi(n \bmod Z) \right]},$$

where

$m = p \times Z + q,\ p \in \left\{0,1,\ldots,\dfrac{M}{Z}-1\right\}$, $q \in \{0,1,\ldots,Z\text{-}1\}$, $n \in \{0,1,\ldots,N\text{-}1\}$, $\Gamma : Z_N \to Z_N$ represents a permutation operation in the finite field $Z_N$, $\Xi : Z_{\frac{M}{Z}} \to Z_{\frac{M}{Z}}$ represents a permutation operation in the finite field $Z_{\frac{M}{Z}}$, and $\Pi : Z_Z \to Z_Z$ represents

a permutation operation in the finite field $Z_Z$. $Z_N$ represents an *N-order* finite field $\{0,1,2, ..., N\text{-}1\}$, $Z_{\frac{M}{Z}}$ represents an $\frac{M}{Z}$ -order finite field $\left\{0,1,2,...,\frac{M}{Z}-1\right\}$, and $Z_Z$ represents a Z-order finite field $\{0,1,2,...,Z\text{-}1\}$.

In a possible implementation, the permutation operation is a mapping operation in a finite field, and the mapping operation may be implemented by using a function.

For example, a permutation function in the permutation operations may be: $\Gamma\left(\left\lfloor\frac{l \times Z}{M}\right\rfloor\right)=\left\lfloor\frac{l \times Z}{M}\right\rfloor^{d}$ ,

gcd($d$,$N$-1)=1, $\Xi\left(n \bmod \frac{M}{Z}\right)=l \bmod \frac{M}{Z}+c$ , and $\Pi(n \bmod Z) = a \times (n \bmod Z) + b,$ where gcd represents a greatest common divisor of two numbers, mod represents a modulo operation, and $l \in Z_{\frac{N \times M}{Z}}, d, n \in Z_N, a, b \in Z_Z, c \in Z_{\frac{M}{Z}}$ . The permutation function $\Gamma\left(\left\lfloor\frac{l \times Z}{M}\right\rfloor\right)=\left\lfloor\frac{l \times Z}{M}\right\rfloor^{d}$ indicates to

permute $\left\lfloor\frac{l \times Z}{M}\right\rfloor$ in the finite field $Z_N$ =$\{0,1,2,...,N\text{-}1\}$ to $\left\lfloor\frac{l \times Z}{M}\right\rfloor^{d}$ in the finite field $Z_N$ =$\{0,1,2,...,N\text{-}1\}$. The permutation

function $\Xi\left(n \bmod \frac{M}{Z}\right)=l \bmod \frac{M}{Z}+c$ indicates to permute $n \bmod \frac{M}{Z}$ in the finite field

$Z_{\frac{M}{Z}} = \left\{0,1,2,...,\frac{M}{Z}-1\right\}$ to $l \bmod \frac{M}{Z}+c$ in the finite field $Z_{\frac{M}{Z}} = \left\{0,1,2,...,\frac{M}{Z}-1\right\}$ . $\Pi(n \bmod Z) = $

$a \times (n \bmod Z) + b$ indicates to permute $n$ mod $Z$ in the finite field $Z_Z$ =$\{0,1,2,...,Z\text{-}1\}$ to $a \times (n \bmod Z) + b$ in the finite field $Z_Z$ = $\{0,1,2,...,Z\text{-}1\}$.

In this embodiment of this application, the length $N$ of the member sequence, the quantity $M$ of member sequences, and the length $Z$ of the zero correlation zone may have different configurations. In different configurations, the transmitting end may generate different permutation complementary sequence sets, and apply the permutation complementary sequence sets to different scenarios, so that overheads are reduced and spectral efficiency is improved, and further a system performance requirement in a current scenario can be met.

The following describes different permutation complementary sequence sets with reference to different configuration cases of the parameters $N$, $M$, and $Z$ of the permutation complementary sequence set.

Case 1: $N = M = Z$. A quantity of permutation complementary sequence sets is $N \times (N\text{-}1)$, and the $l^{th}$ permutation complementary sequence set $s^{[k][l]}$ in the $k^{th}$ group of permutation complementary sequence sets is represented as:

$$s^{[k][l]} = \begin{bmatrix} s_0^{[k][l]} \\ \mathrm{M} \\ s_{N-1}^{[k][l]} \end{bmatrix} = \begin{bmatrix} s_{0,0}^{[k][l]} & \mathrm{L} & s_{0,N-1}^{[k][l]} \\ \mathrm{M} & \mathrm{O} & \mathrm{M} \\ s_{N-1,0}^{[k][l]} & \mathrm{L} & s_{N-1,N-1}^{[k][l]} \end{bmatrix},$$

where

$N$ is a length of a member sequence, $M$ is a quantity of member sequences, $Z$ is a length of a zero correlation zone, $k \in \{1,2,...,N\text{-}1\}$, and $l \in \{0,1,...,N\text{-}1\}$.

The $n^{th}$ member symbol $s_{m,n}^{[k][l]}$ in the $m^{th}$ member sequence in the permutation complementary sequence set $s^{[k][l]}$ is represented as:

$$s_{m,n}^{[k][l]} = e^{j \times \left[ \frac{2\pi}{N} \times n \times \Gamma(l) + \frac{2\pi}{N} \times k \times m \times \Pi(n) \right]},$$

where

$m \in \{0,1,...,N\text{-}1\}$, $n \in \{0,1,...,N\text{-}1\}$, $\Gamma:Z_N \to Z_N$ represents a permutation operation in the finite field $Z_N$, and $\Pi:Z_N \to Z_N$ represents a permutation operation in the finite field $Z_N$.

For example, a permutation function in the foregoing permutation operation may be: $\Gamma(l)=l^d$, gcd(d,N-1)=1, and $\Pi(n)=a \times n+b$, where gcd represents a greatest common divisor of two numbers, and $d,l,a,b,n \in Z_N$. The permutation function $\Gamma(l)=l^d$ indicates to permute $l$ in the finite field $Z_N =\{0,1,2,...,N\text{-}1\}$ to $l^d$ in the finite field $Z_N =\{0,1,2,...,N\text{-}1\}$. $\Pi(n) =a \times n+b$ indicates to permute $n$ in the finite field $Z_Z =\{0,1,2,...,Z\text{-}1\}$ to $a \times n+b$ in the finite field $Z_Z =\{0,1,2,...,Z\text{-}1\}$.

The following analyzes an aperiodic correlation of the permutation complementary sequence set in a parameter configuration solution $N = M = Z$:

(1) An aperiodic autocorrelation function of any sequence set $s^{[k][l]}$ is:

$$R_{s^{[k][l]}}(\tau) = \sum_{n=0}^{N-1-\tau} e^{-j \times \frac{2\pi}{N} \times \tau \times \Gamma(l)} \times \sum_{m=0}^{N-1} e^{j \times \frac{2\pi}{N} \times k \times m \times \left[ \Pi(n) - \Pi(n+\tau) \right]} = 0.$$

When a delay $\tau \neq 0$, $\Pi(n)\text{-}\Pi(n+\tau) \neq 0$, and a physical meaning of the second summation indicates a sum of $N$ points sampled at equal intervals on a unit circle of a complex plane. Therefore, the second summation is equal to 0.

For example, when $\Pi(n)=a \times n+b$, the second summation is specifically:

$$\sum_{m=0}^{N-1} e^{j \times \frac{2\pi}{N} \times k \times m \times \left[ a \times n+b - \left( a \times (n+\tau)+b \right) \right]} = \sum_{m=0}^{N-1} e^{j \times \frac{2\pi}{N} \times k \times m \times (-a\tau)},$$

where

$e^{j \times \frac{2\pi}{N} \times k \times m \times [-a\tau]}$ represents a point on the unit circle of the complex plane, $\sum_{m=0}^{N-1} e^{j \times \frac{2\pi}{N} \times k \times m \times (-a\tau)}$ represents: summing

the $N$ points sampled at equal intervals on the unit circle of the complex plane, and $\sum_{m=0}^{N-1} e^{j \times \frac{2\pi}{N} \times k \times m \times (-a\tau)} = 0$ may be

obtained by adding the $N$ complex numbers.

Therefore, any permutation complementary sequence set $s^{[k][l]}$ has an ideal aperiodic autocorrelation property.

(2) An aperiodic cross-correlation function of intra-group sequence sets $s^{[k][l]}$ and $s^{[k][l]}$ is:

$$R_{s^{[k][l]}s^{[k][l]}}(\tau) = \sum_{n=0}^{N-1-\tau} e^{j \times \frac{2\pi}{N} \times \left[ n \times \Gamma(l) - (n+\tau) \times \Gamma(1) \right]} \times \sum_{m=0}^{N-1} e^{j \times \frac{2\pi}{N} \times k \times m \times \left[ \Pi(n) - \Pi(n+\tau) \right]} = 0.$$

When a delay $\tau \neq 0$, the second summation is equal to 0. When a delay $\tau = 0$, the first summation is equal to 0. That is, in $N$ values of $l$ in $l \in \{0,1,...,N\text{-}1\}$, aperiodic cross-correlation functions of intra-group sequence sets are all equal to 0.

Therefore, the permutation complementary sequence set $s^{[k][l]}$ has an ideal intra-group aperiodic cross-correlation property, and there are $N$ zero-correlation sequence sets in total in the group.

(3) An aperiodic cross-correlation function of inter-group sequence sets $s^{[k][l]}$ and $s^{[\kappa][l]}$ is:

$$R_{s^{[k][l]}s^{[\kappa][l]}}(\tau) = \sum_{n=0}^{N-1-\tau} e^{j \times \frac{2\pi}{N} \times \left[ n \times \Gamma(l) - (n+\tau) \times \Gamma(1) \right]} \times \sum_{m=0}^{N-1} e^{j \times \frac{2\pi}{N} \times m \times \left[ k \times \Pi(n) - \kappa \times \Pi(n+\tau) \right]} \in \{0, N\}.$$

For a permutation operation $\Pi:Z_N \to Z_N$, there is only one $\tilde{n} \in \mathbb{Z}_N$ such that $k \times \Pi(\tilde{n}) = \kappa \times \Pi(\tilde{n}+\tau)$, and in this case, the second summation is equal to $N$. When $\tilde{n} \geq N -\tau$, the first summation is equal to 0. When $\tilde{n} \leq N -1- \tau$, the first

summation is equal to 1. That is, in $N$-1 values of $k$ in $k \in \{1,2,...,N$-1$\}$, a maximum value of an aperiodic cross-correlation of inter-group sequence sets is $N$, a peak value of an aperiodic autocorrelation is $N^2$, and a maximum value of the cross-correlation is only $\dfrac{1}{N}$ of the peak value, so that a side lobe of an aperiodic correlation can be effectively suppressed.

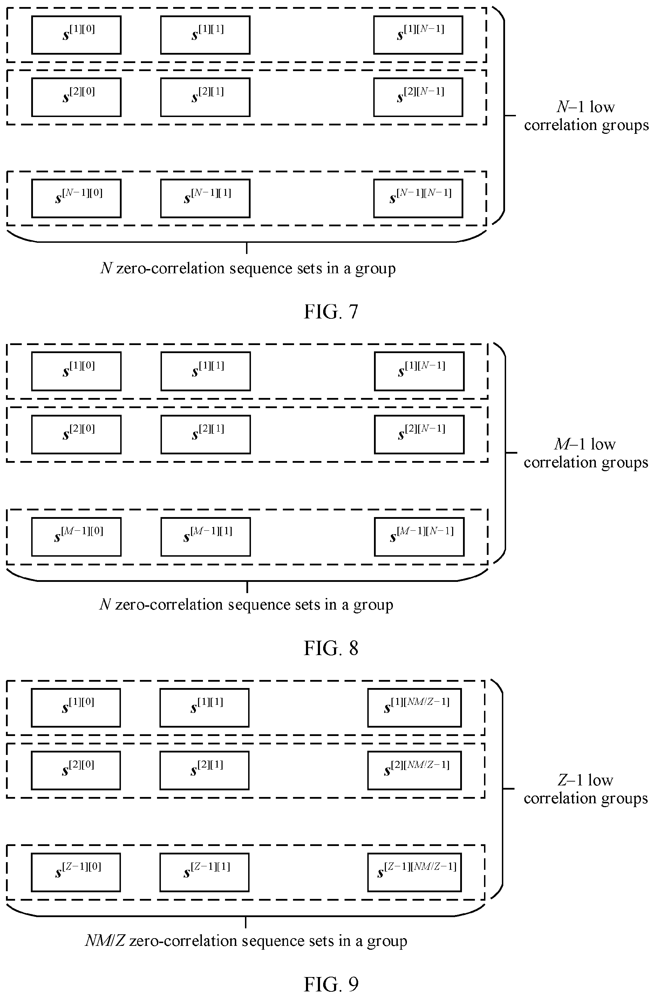

Therefore, in a diagram of a cross-correlation property of permutation complementary sequence sets in FIG. 7, when $N = M = Z$, the permutation complementary sequence set $\boldsymbol{s}^{[k][l]}$ has an ideal aperiodic autocorrelation property, an ideal intra-group aperiodic cross-correlation property, and a low inter-group aperiodic cross-correlation property. There are $N$ zero-correlation sequence sets in the group, there are $N$-1 low-correlation groups in total, and the maximum value of the aperiodic cross-correlation of the inter-group sequence sets is $N$.

When $N = M = Z$, the length $N$ of the member sequence, the quantity $M$ of member sequences, and the zero correlation zone $Z$ of the permutation complementary sequence set form a 3-tuple $(N,N,N)$. Under a same time-frequency resource, a length of a member sequence of a ZC sequence is $N \times M$, and a zero correlation zone is $M \times Z$, which form a 2-tuple $(N^2,N^2)$. By analyzing evaluation indicators of the permutation complementary sequence set and the ZC sequence, evaluation indicator situations of the permutation complementary sequence set $(N,N,N)$ and a member of the ZC sequence $(N^2,N^2)$ are obtained, as shown in Table 1. The permutation complementary sequence set $(N,N,N)$ is obtained by analyzing the aperiodic correlation of the permutation complementary sequence set. Analysis of evaluation indicators of the ZC sequence $(N^2,N^2)$ is the same as that in the conventional technology, and details are not described herein again.

Table 1

| Sequence type | Permutation complementary sequence set $(N,N,N)$ | | ZC sequence $(N^2,N^2)$ | |
|---|---|---|---|---|
| Evaluation parameter | Sequence capacity | Cross-correlation value | Sequence capacity | Cross-correlation value |
| Zero correlation zone | $N$ | 0 | 0 | 0 |
| Low correlation zone | $N \times (N - 1)$ | $N$ | $N^2 - 1$ | $N$ |

It can be seen from Table 1 that, under a same time-frequency resource condition, the sequence capacity $N$ of the permutation complementary sequence set $(N,N,N)$ in the zero correlation zone is greater than the sequence capacity 0 of the ZC sequence $(N^2,N^2)$ in the zero correlation zone, and the sequence capacity $N \times (N - 1)$ of the permutation complementary sequence set $(N,N,N)$ in the low correlation zone is less than the sequence capacity $N^2 -1$ of the ZC sequence $(N^2,N^2)$ in the low correlation zone.

After the transmitting end determines the permutation complementary sequence set, when a quantity of permutation complementary sequence sets required for configuring a cell is less than or equal to a quantity of permutation complementary sequence sets in the group, the transmitting end may determine the target permutation complementary sequence set from the zero correlation zone. When the quantity of permutation complementary sequence sets required by for configuring the cell is greater than the quantity of permutation complementary sequence sets in the group, the transmitting end needs to determine the target permutation complementary sequence set from the low correlation zone. That is, although the sequence capacity of the permutation complementary sequence set in the low correlation zone is less than the sequence capacity of the ZC sequence in the low correlation zone, the permutation complementary sequence set has small impact on signal sending. Therefore, when $N = M = Z$ is configured, compared with the ZC sequence, a cyclic prefix does not need to be added to the permutation complementary sequence set. This reduces overheads and improves spectral efficiency, and further improves a sequence capacity.

Case 2: $N > M = Z$. A quantity of permutation complementary sequence sets is $(M$-1$)\times N$, and the $l^{th}$ permutation complementary sequence set $\boldsymbol{s}^{[k][l]}$ in the $k^{th}$ group of permutation complementary sequence sets is represented as:

$$\boldsymbol{s}^{[k][l]} = \begin{bmatrix} \boldsymbol{s}_0^{[k][l]} \\ \mathrm{M} \\ \boldsymbol{s}_{M-1}^{[k][l]} \end{bmatrix} = \begin{bmatrix} s_{0,0}^{[k][l]} & \mathrm{L} & s_{0,N-1}^{[k][l]} \\ \mathrm{M} & \mathrm{O} & \mathrm{M} \\ s_{M-1,0}^{[k][l]} & \mathrm{L} & s_{M-1,N-1}^{[k][l]} \end{bmatrix},$$

where
$N$ is a length of a member sequence, $M$ is a quantity of member sequences, $Z$ is a length of a zero correlation zone, $k \in \{1,2,...,M$-1$\}$, and $l \in \{0,1,...,N$-1$\}$.

The $n^{th}$ symbol $s_{m,n}^{[k][l]}$ in the $m^{th}$ member sequence in the permutation complementary sequence set $s^{[k][l]}$ is represented as:

$$s_{m,n}^{[k][l]} = e^{j \times \left[ \frac{2\pi}{N} \times n \times \Gamma(l) + \frac{2\pi}{M} \times k \times m \times \Pi(n \bmod M) \right]},$$

where

$m \in \{0,1,...,M\text{-}1\}$, $n \in \{0,1,...,N\text{-}1\}$, $\Gamma : Z_N \to Z_N$ represents a permutation operation in the finite field $Z_N$, and $\Pi : Z_M \to Z_M$ represents a permutation operation in the finite field $Z_M$.

For example, a permutation function in the permutation operations may be: $\Gamma(l)=l^d$, gcd($d,N$-1)=1, and $\Pi$($n\bmod M$)=$a \times$($n\bmod M$)+$b$, where gcd represents a greatest common divisor of two numbers, mod represents a modulo operation, and $d,l,n \in Z_N, a,b \in Z_M$. The permutation function $\Gamma(l)=l^d$ indicates to permute $l$ in the finite field $Z_N$ ={0,1,2,...,$N$-1} to $l^d$ in the finite field $Z_N$ ={0,1,2,...,$N$-1}. The permutation function $\Pi$($n\bmod M$)=$a \times$($n\bmod M$)+$b$ indicates to permute $n\bmod M$ in the finite field $Z_M$ ={0,1,2,...,$M$-1} to $a \times$($n\bmod M$)+$b$ in the finite field $Z_M$ ={0,1,2,...,$M$-1}.

The following analyzes an aperiodic correlation of the permutation complementary sequence set:

(1) An aperiodic autocorrelation function of any sequence set $s^{[k][l]}$ is:

$$R_{s^{[k][l]}}(\tau) = \sum_{n=0}^{N-1-\tau} e^{-j \times \frac{2\pi}{N} \times \tau \times \Gamma(l)} \times \sum_{m=0}^{M-1} e^{j \times \frac{2\pi}{M} \times k \times m \times \left[ \Pi(n \bmod M) - \Pi((n+\tau) \bmod M) \right]} = 0.$$

When a delay $\tau \neq 0$, the second summation is equal to 0.

Therefore, any permutation complementary sequence set $s^{[k][l]}$ has an ideal aperiodic autocorrelation property.

(2) An aperiodic cross-correlation function of intra-group sequence sets $s^{[k][l]}$ and $s^{[k][l]}$ is:

$$R_{s^{[k][l]} s^{[k][l]}}(\tau) = \sum_{n=0}^{N-1-\tau} e^{j \times \frac{2\pi}{N} \times \left[ n \times \Gamma(l) - (n+\tau) \times \Gamma(1) \right]} \times \sum_{m=0}^{M-1} e^{j \times \frac{2\pi}{M} \times k \times m \times \left[ \Pi(n \bmod M) - \Pi((n+\tau) \bmod M) \right]} = 0.$$

When a delay $\tau \neq 0$, the second summation is equal to 0. When a delay $\tau = 0$, the first summation is equal to 0. That is, in $N$ values of $l$ in $l \in \{0,1,...,N\text{-}1\}$, aperiodic cross-correlation functions of intra-group sequence sets are all equal to 0.

Therefore, the permutation complementary sequence set $s^{[k][l]}$ has an ideal intra-group aperiodic cross-correlation property, and there are $N$ zero-correlation sequence sets in total in the group.

(3) An aperiodic cross-correlation function of inter-group sequence sets $s^{[k][l]}$ and $s^{[\kappa][l]}$ is:

$$R_{s^{[k][l]} s^{[\kappa][l]}}(\tau) = \sum_{n=0}^{N-1-\tau} e^{j \times \frac{2\pi}{N} \times \left[ n \times \Gamma(l) - (n+\tau) \times \Gamma(1) \right]} \times \sum_{m=0}^{M-1} e^{j \times \frac{2\pi}{M} \times m \times \left[ k \times \Pi(n \bmod M) - \kappa \times \Pi(n+\tau) \bmod M \right]} \leq M \times \left\lceil \frac{N}{M} \right\rceil.$$

For a permutation operation $\Pi : Z_M \to Z_M$, there is only one $\tilde{n} \in \mathbb{Z}_M$ such that $k \times \Pi(\tilde{n} \bmod M) = \kappa \times \Pi((\tilde{n} + \tau) \bmod M)$, and in this case, the second summation is equal to $M$. On this basis, $\forall \tilde{n} \in \mathbb{Z}_{N-1-\tau}$, so that $k \times \Pi(\tilde{n} \bmod M) = \kappa \times \Pi((\tilde{n}+\tau) \bmod M)$. The first summation does not exceed $\left\lceil \frac{N}{M} \right\rceil$. That is, in M-1 values of $k$ in $k \in \{1,2,...,M\text{-}1\}$, a maximum value of an aperiodic cross-correlation of inter-group sequence sets is $M \times \left\lceil \frac{N}{M} \right\rceil$, so that a side lobe of an aperiodic correlation can be effectively suppressed.

Therefore, in another diagram of a cross-correlation property of permutation complementary sequence sets in FIG. 8, when $N > M = Z$, the permutation complementary sequence set $s^{[k][l]}$ has an ideal aperiodic autocorrelation property, an ideal intra-group aperiodic cross-correlation property, and a low inter-group aperiodic cross-correlation property. There are $N$ zero-correlation sequence sets in the group, there are $M$-1 low-correlation groups in total, and the maximum value of the aperiodic cross-correlation of the inter-group sequence sets is $M \times \left\lceil \dfrac{N}{M} \right\rceil$.

When $N > M = Z$, the length $N$ of the member sequence, the quantity $M$ of member sequences, and the zero correlation zone Z of the permutation complementary sequence set form a 3-tuple $(N,M,M)$. Under a same time-frequency resource, a length of a member sequence of a ZC sequence is $N \times M$, and a zero correlation zone is $M \times Z$, which form a 2-tuple $(N \times M, M^2)$. By analyzing evaluation indicators of the permutation complementary sequence set and the ZC sequence, evaluation indicator situations of the permutation complementary sequence set $(N,M,M)$ and the ZC sequence $(N \times M, M^2)$ are obtained, as shown in Table 2. The permutation complementary sequence set $(N,M,M)$ is obtained by analyzing the aperiodic correlation of the permutation complementary sequence set. Analysis of evaluation indicators of the ZC sequence $(N \times M, M^2)$ is the same as that in the conventional technology, and details are not described herein again.

Table 2

| Sequence type | Permutation complementary sequence set $(N,M,M)$ | | ZC sequence $(N \times M, M^2)$ | |
|---|---|---|---|---|
| Evaluation parameter | Sequence capacity | Cross-correlation value | Sequence capacity | Cross-correlation value |
| Zero correlation zone | $N$ | 0 | $\left\lfloor \dfrac{N}{M} \right\rfloor$ | 0 |
| Low correlation zone | $N \times (M-1)$ | $M \times \left\lceil \dfrac{N}{M} \right\rceil$ | $N \times M - 1$ | $\sqrt{N \times M}$ |

**It can** be seen from Table 2 that, under a same time-frequency resource condition, the sequence capacity $N$ of the permutation complementary sequence set $(N,M,M)$ in the zero correlation zone is greater than the sequence capacity $\left\lfloor \dfrac{N}{M} \right\rfloor$ of the ZC sequence $(N \times M, M^2)$ in the zero correlation zone. Therefore, when $N > M = Z$ is configured, compared with the ZC sequence, a cyclic prefix does not need to be added to the permutation complementary sequence set. This reduces overheads and improves spectral efficiency, and further improves a sequence capacity, so that a signal detection capability of a receiving end can be improved in a scenario in which noise is large or in a scenario in which the receiving end has a high requirement for signal detection performance.

Case 3: $N > M > Z$. A quantity of permutation complementary sequence sets is $\left( \dfrac{N \times M}{Z} \right) \times (Z-1)$, and the $l$th permutation complementary sequence set $\boldsymbol{s}^{[k][l]}$ in the $k$th group of permutation complementary sequence sets is represented as:

$$\boldsymbol{s}^{[k][l]} = \begin{bmatrix} \boldsymbol{s}_0^{[k][l]} \\ \mathbf{M} \\ \boldsymbol{s}_{M-1}^{[k][l]} \end{bmatrix} = \begin{bmatrix} s_{0,0}^{[k][l]} & \mathbf{L} & s_{0,N-1}^{[k][l]} \\ \mathbf{M} & \mathbf{O} & \mathbf{M} \\ s_{M-1,0}^{[k][l]} & \mathbf{L} & s_{M-1,N-1}^{[k][l]} \end{bmatrix},$$

where
$N$ is a length of a member sequence, $M$ is a quantity of member sequences, Z is a length of a zero correlation zone, $k \in \{1,2,...,Z-1\}$, and $l \in \left\{ 0,1,..., \dfrac{N \times M}{Z} - 1 \right\}$.

The $n^{th}$ member symbol $s^{[k][l]}_{m,n}$ in the $m^{th}$ member sequence in the permutation complementary sequence set $\boldsymbol{s}^{[k]}$ $[l]$ is represented as:

$$s^{[k][l]}_{m,n} = e^{j \times \left[\frac{2\pi}{N} \times n \times \Gamma\left(\left\lfloor \frac{l \times Z}{M} \right\rfloor\right) + \frac{2\pi}{M} \times Z \times p \times \Xi\left(l \bmod \frac{M}{Z}\right) + \frac{2\pi}{Z} \times k \times q \times \Pi(n \bmod Z)\right]},$$

where

$m = p \times Z + q$, $p \in \left\{0, 1, \ldots, \dfrac{M}{Z} - 1\right\}$, $q \in \{0,1,\ldots,Z\text{-}1\}$, $n \in \{0,1,\ldots,N\text{-}1\}$, $\Gamma: Z_N \to Z_N$ represents a permutation operation in the finite field $Z_N$, $\Xi: Z_{\frac{M}{Z}} \to Z_{\frac{M}{Z}}$ represents a permutation operation in the finite field $Z_{\frac{M}{Z}}$, and $\Pi: Z_Z \to Z_Z$ represents a permutation operation in the finite field $Z_Z$.

For example, a permutation function in the permutation operations may be: $\Gamma\left(\left\lfloor \dfrac{l \times Z}{M} \right\rfloor\right) = \left\lfloor \dfrac{l \times Z}{M} \right\rfloor^d$ ,

$\gcd(d, N\text{-}1) = 1$, $\Xi\left(n \bmod \dfrac{M}{Z}\right) = l \bmod \dfrac{M}{Z} + c$ , and $\Pi(n \bmod Z) = a \times (n \bmod Z) + b$, where gcd represents a greatest common divisor of two numbers, mod represents a modulo operation, and $l \in Z_{\frac{N \times M}{Z}}, d, n \in Z_N, a, b \in Z_Z, c \in Z_{\frac{M}{Z}}$ . The permutation function $\Gamma\left(\left\lfloor \dfrac{l \times Z}{M} \right\rfloor\right) = \left\lfloor \dfrac{l \times Z}{M} \right\rfloor^d$ indicates to permute $\left\lfloor \dfrac{l \times Z}{M} \right\rfloor$ in the finite field $Z_N = \{0,1,2,\ldots,N\text{-}1\}$ to $\left\lfloor \dfrac{l \times Z}{M} \right\rfloor^d$ in the finite field $Z_N = \{0,1,2,\ldots,N\text{-}1\}$. The permutation function $\Xi\left(n \bmod \dfrac{M}{Z}\right) = l \bmod \dfrac{M}{Z} + c$ indicates to permute $n \bmod \dfrac{M}{Z}$ in the finite field $Z_{\frac{M}{Z}} = \left\{0,1,2,\ldots,\dfrac{M}{Z} - 1\right\}$ to $l \bmod \dfrac{M}{Z} + c$ in the finite field $Z_{\frac{M}{Z}} = \left\{0,1,2,\ldots,\dfrac{M}{Z} - 1\right\}$ . The permutation function $\Pi(n \bmod Z) = a \times (n \bmod Z) + b$ indicates to permute $n \bmod Z$ in the finite field $Z_Z = \{0,1,2,\ldots,Z\text{-}1\}$ to $a \times (n \bmod Z) + b$ in the finite field $Z_Z = \{0,1,2,\ldots,Z\text{-}1\}$.

The following analyzes an aperiodic correlation of the permutation complementary sequence set in a parameter configuration solution $N > M > Z$:

(1) An aperiodic autocorrelation function of any sequence set $\boldsymbol{s}^{[k][l]}$ is:

$$R_{\boldsymbol{s}^{[k][l]}}(\tau) = \frac{M}{Z} \times \sum_{n=0}^{N-1-\tau} e^{-j \times \frac{2\pi}{N} \times \tau \times \Gamma\left(\left\lfloor \frac{l \times Z}{M} \right\rfloor\right)} \times \sum_{q=0}^{Z-1} e^{j \times \frac{2\pi}{Z} \times k \times q \times \left[\Pi(n \bmod Z) - \Pi((n+\tau) \bmod Z)\right]} = 0.$$

When a delay $\tau \neq 0$, the second summation is equal to 0.

Therefore, any permutation complementary sequence set $\boldsymbol{s}^{[k][l]}$ has an ideal aperiodic autocorrelation property.

(2) An aperiodic cross-correlation function of intra-group sequence sets $\boldsymbol{s}^{[k][l]}$ and $\boldsymbol{s}^{[k][l]}$ is:

$$R_{s^{[k][l]}s^{[k][1]}}\left(\tau\right) = \sum_{n=0}^{N-1-\tau} e^{j\times\frac{2\pi}{N}\times\left[n\times\Gamma\left(\left\lfloor\frac{l\times Z}{M}\right\rfloor\right)-(n+\tau)\times\Gamma\left(\left\lfloor\frac{1\times Z}{M}\right\rfloor\right)\right]} \times \sum_{p=0}^{\frac{M}{Z}-1} e^{j\times\frac{2\pi}{M}\times Z\times p\times\left[\Xi\left(l\bmod\frac{M}{Z}\right)-\Xi\left(1\bmod\frac{M}{Z}\right)\right]} \times$$

$$\sum_{q=0}^{Z-1} e^{j\times\frac{2\pi}{Z}\times k\times q\times\left[\Pi(n\bmod Z)-\Pi((n+\tau)\bmod Z)\right]}$$

$$= 0$$

When a delay $\tau \neq 0$, the third summation is equal to 0. When $\Xi\left(l\bmod\frac{M}{Z}\right) \neq \Xi\left(1\bmod\frac{M}{Z}\right)$, the second summation is equal to 0. When $\tau = 0$ and $\Gamma\left(\left\lfloor l\times\frac{Z}{M}\right\rfloor\right) \neq \Gamma\left(\left\lfloor 1\times\frac{Z}{M}\right\rfloor\right)$, the first summation is equal to 0. That is, in $\frac{N\times M}{Z}$ values of $l$ in $l \in \left\{0,1,\ldots,\frac{N\times M}{Z}-1\right\}$, aperiodic cross-correlation functions of intra-group sequence sets are all equal to 0.

Therefore, the permutation complementary sequence set $s^{[k][l]}$ has an ideal intra-group aperiodic cross-correlation property, and there are $\frac{N\times M}{Z}$ zero-correlation sequence sets in total in the group.

(3) An aperiodic cross-correlation function of inter-group sequence sets $s^{[k][l]}$ and $s^{[\kappa][l]}$ is:

$$R_{s^{[k][l]}s^{[\kappa][1]}}\left(\tau\right) = \sum_{n=0}^{N-1-\tau} e^{j\times\frac{2\pi}{N}\times\left[n\times\Gamma\left(\left\lfloor\frac{l\times Z}{M}\right\rfloor\right)-(n+\tau)\times\Gamma\left(\left\lfloor\frac{1\times Z}{M}\right\rfloor\right)\right]} \times \sum_{p=0}^{\frac{M}{Z}-1} e^{j\times\frac{2\pi}{M}\times Z\times p\times\left[\Xi\left(l\bmod\frac{M}{Z}\right)-\Xi\left(1\bmod\frac{M}{Z}\right)\right]} \times$$

$$\sum_{q=0}^{Z-1} e^{j\times\frac{2\pi}{Z}\times q\times\left[k\times\Pi(n\bmod Z)-\kappa\times\Pi((n+\tau)\bmod Z)\right]}$$

$$\leq M \times \left\lceil\frac{N}{Z}\right\rceil$$

For a permutation operation $\Pi:Z_Z \to Z_Z$, there is only one $\tilde{n} \in \mathbb{Z}_Z$ such that $k\times\Pi(\tilde{n}\bmod Z)=\kappa\times\Pi+((\tilde{n}+\tau)\bmod Z)$, and in this case, the third summation is equal to Z. $\Xi\left(l\bmod\frac{M}{Z}\right) \neq \Xi\left(1\bmod\frac{M}{Z}\right)$, the second summation is equal to $\frac{M}{Z}$. On this basis, $\forall\tilde{n} \in \mathbb{Z}_{N-1-\tau}$, so that $k\times\Pi(\tilde{n}\bmod Z)=\kappa\times\Pi((\tilde{n}+\tau)\bmod Z)$. The first summation does not exceed $\left\lceil\frac{N}{Z}\right\rceil$. That is, in Z-1 values of $k$ in $k \in \{1,2,\ldots,Z-1\}$, a maximum value of an aperiodic cross-correlation of inter-group sequence sets is $M \times \left\lceil\frac{N}{Z}\right\rceil$, so that a side lobe of an aperiodic correlation can be effectively suppressed.

Therefore, in still another diagram of a cross-correlation property of permutation complementary sequence sets in FIG. 9, when $N > M > Z$, the permutation complementary sequence set $s^{[k][l]}$ has an ideal aperiodic autocorrelation property, an ideal intra-group aperiodic cross-correlation property, and a low inter-group aperiodic cross-correlation

property. There are $\dfrac{N \times M}{Z}$ zero-correlation sequence sets in the group, there are $Z$ -1 low-correlation groups in total, and the maximum value of the cross-correlation is $M \times \left\lceil \dfrac{N}{Z} \right\rceil$.

When $N > M > Z$, the length $N$ of the member sequence, the quantity $M$ of member sequences, and the zero correlation zone $Z$ of the permutation complementary sequence set form a 3-tuple ($N,M,Z$). Under a same time-frequency resource, a length of a member sequence of a ZC sequence is $N \times M$, and a zero correlation zone is $M \times Z$, which form a 2-tuple ($N \times M, M \times Z$). By analyzing evaluation indicators of the permutation complementary sequence set and the ZC sequence, evaluation indicator situations of evaluation indicators of the permutation complementary sequence set ($N,M,Z$) and the ZC sequence ($N \times M, M \times Z$) are obtained, as shown in Table 3. The permutation complementary sequence set ($N,M,Z$) is obtained by analyzing the aperiodic correlation of the permutation complementary sequence set. Analysis of evaluation indicators of the ZC sequence ($N \times M, M \times Z$) is the same as that in the conventional technology, and details are not described herein again.

Table 3

| Sequence type | Permutation complementary sequence set ($N,M,Z$) | | ZC sequence ($N \times M, M \times Z$) | |
|---|---|---|---|---|
| Evaluation parameter | Sequence capacity | Cross-correlation value | Sequence capacity | Cross-correlation value |
| Zero correlation zone | $\dfrac{N \times M}{Z}$ | 0 | $\left\lfloor \dfrac{N}{Z} \right\rfloor$ | 0 |
| Low correlation zone | $\dfrac{N \times M \times (Z-1)}{Z}$ | $M \times \left\lceil \dfrac{N}{Z} \right\rceil$ | $N \times M$ - 1 | $\sqrt{N \times M}$ |

It can be seen from Table 3 that, under a same time-frequency resource condition, the sequence capacity

$\dfrac{N \times M}{Z}$ of the permutation complementary sequence set ($N,M,Z$) in the zero correlation zone is greater than the

sequence capacity $\left\lfloor \dfrac{N}{Z} \right\rfloor$ of the ZC sequence ($N \times M, M \times Z$) in the zero correlation zone. Therefore, when $N > M > Z$ is configured, compared with the ZC sequence, a cyclic prefix does not need to be added to the permutation complementary sequence set. This reduces overheads and improves spectral efficiency, and is also applicable to a multi-user access scenario.

In a possible implementation, the permutation complementary sequence set is a partial sequence set in a candidate permutation complementary sequence set, a quantity of candidate permutation complementary sequence sets

is $\left( \dfrac{N \times M}{Z} \right) \times (Z-1)$, and the $l^{\text{th}}$ permutation complementary sequence set $\boldsymbol{s}^{[k][l]}$ in the $k^{\text{th}}$ group of permutation complementary sequence sets is represented as:

$$\boldsymbol{s}^{[k][l]} = \begin{bmatrix} \boldsymbol{s}_0^{[k][l]} \\ \mathbf{M} \\ \boldsymbol{s}_{M-1}^{[k][l]} \end{bmatrix} = \begin{bmatrix} s_{0,0}^{[k][l]} & \mathbf{L} & s_{0,N-1}^{[k][l]} \\ \mathbf{M} & \mathbf{O} & \mathbf{M} \\ s_{M-1,0}^{[k][l]} & \mathbf{L} & s_{M-1,N-1}^{[k][l]} \end{bmatrix},$$

where

$N$ is a length of a member sequence, $M$ is a quantity of member sequences, $Z$ is a length of a zero correlation zone, $N > M >$

$Z$, $M$ is divisible by $Z$, $k \in \{1,2,...,Z\text{-}1\}$, and $l \in \left\{0,1,...,\dfrac{N \times M}{Z} - 1\right\}$ .

The $n^{\text{th}}$ member symbol $s_{m,n}^{[k][l]}$ in the $m^{\text{th}}$ member sequence in the permutation complementary sequence set $\boldsymbol{s}^{[k]}$ $[t]$ is represented as:

$$s_{m,n}^{[k][l]} = e^{j \times \left[\frac{2\pi}{N} \times n \times \Gamma\left(\left\lfloor \frac{l \times Z}{M} \right\rfloor\right) + \frac{2\pi}{M} \times Z \times p \times \Xi\left(l \bmod \frac{M}{Z}\right) + \frac{2\pi}{Z} \times k \times q \times \Pi\left(n \bmod Z\right)\right]},$$

where

$m = p \times Z + q$, $p \in \left\{0,1,...,\dfrac{M}{Z} - 1\right\}$ , $q \in \{0,1,...,Z\text{-}1\}$, $n \in \{0,1,...,N\text{-}1\}$, $\Gamma:Z_N \to Z_N$ represents a permutation operation in a finite field $Z_N$, $\Xi:Z_{\frac{M}{Z}} \to Z_{\frac{M}{Z}}$ represents a permutation operation in a finite field $Z_{\frac{M}{Z}}$ , and $\Pi:Z_Z \to Z_Z$ represents a permutation operation in a finite field $Z_Z$.

Specifically, the permutation complementary sequence set is a partial sequence set in the candidate permutation complementary sequence set, or may be referred to as a restricted set obtained by restricting the candidate permutation complementary sequence set.

For example, a permutation function in the permutation operations may be: $\Gamma\left(\left\lfloor \dfrac{l \times Z}{M} \right\rfloor\right) = \left\lfloor \dfrac{l \times Z}{M} \right\rfloor^{d}$ ,

$\gcd(d,N\text{-}1)=1$, $\Xi\left(n \bmod \dfrac{M}{Z}\right) = l \bmod \dfrac{M}{Z} + c$ , and $\Pi(n \bmod Z) = a \times (n \bmod Z) + b$, where gcd represents a greatest common divisor of two numbers, mod represents a modulo operation, and $l \in Z_{\frac{N \times M}{Z}}, d, n \in Z_N, a, b \in Z_Z, c \in Z_{\frac{M}{Z}}$ . The permutation function $\Gamma\left(\left\lfloor \dfrac{l \times Z}{M} \right\rfloor\right) = \left\lfloor \dfrac{l \times Z}{M} \right\rfloor^{d}$ indicates to

permute $\left\lfloor \dfrac{l \times Z}{M} \right\rfloor$ in the finite field $Z_N = \{0,1,2,...,N\text{-}1\}$ to $\left\lfloor \dfrac{l \times Z}{M} \right\rfloor^{d}$ in the finite field $Z_N = \{0,1,2,...,N\text{-}1\}$. The permutation

function $\Xi\left(n \bmod \dfrac{M}{Z}\right) = l \bmod \dfrac{M}{Z} + c$ indicates to permute $n \bmod \dfrac{M}{Z}$ in the finite field

$Z_{\frac{M}{Z}} = \left\{0,1,2,...,\dfrac{M}{Z} - 1\right\}$ to $l \bmod \dfrac{M}{Z} + c$ in the finite field $Z_{\frac{M}{Z}} = \left\{0,1,2,...,\dfrac{M}{Z} - 1\right\}$ . The permutation

function $\Pi(n \bmod Z) = a \times (n \bmod Z) + b$ indicates to permute $n \bmod Z$ in the finite field $Z_Z = \{0,1,2,...,Z\text{-}1\}$ to $a \times (n \bmod Z) + b$ in the finite field $Z_Z = \{0,1,2,...,Z\text{-}1\}$.

Optionally, the permutation complementary sequence set is obtained by restricting an index number $l$ in the candidate permutation complementary sequence set based on a quantity of subcarrier spacings for combating a Doppler frequency shift. For example, $l$ may belong to the following set:

$$l \in \left\{\dfrac{(2f+1) \times M}{Z} \times i + j \;\middle|\; i = 0,1,...,\dfrac{N}{2f+1} - 1, j = 0,1,...,\dfrac{M}{Z} - 1\right\},$$

where

$f$ is the quantity of subcarrier spacings for combating the Doppler frequency shift, and is a positive integer. $i$ takes all values in $\left\{0,1,\ldots,\dfrac{N}{2f+1}-1\right\}$, $j$ takes all values in $\left\{0,1,\ldots,\dfrac{M}{Z}-1\right\}$, and a quantity of elements in the set $I$ is $\left(\dfrac{M}{Z}\right)\times\left(\dfrac{N}{2f+1}\right)$.

It should be understood that the permutation complementary sequence set may also be referred to as a restricted permutation complementary sequence set or a restricted set of the permutation complementary sequence set. This is not limited in this application.

Specifically, $\forall l \neq 1$, so that $\left[\Gamma\left(\dfrac{l\times Z}{M}\right)-\Gamma\left(\dfrac{1\times Z}{M}\right)\right] mod\ N \neq F$ and F ={1, 2,..., f,N-f,N-f+1,...,N-1}. That is, the permutation complementary sequence set satisfies an ideal intra-group aperiodic cross-correlation property, and there are $\dfrac{M\times\left\lfloor\dfrac{N}{2f+1}\right\rfloor}{Z}$ zero-correlation sequence sets permutation complementary sequence set in total in the group. If the set of intra-group sequence set index numbers is not restricted. That is, $l\in\left\{0,1,\ldots,\dfrac{N\times M}{Z}-1\right\}$. In this case, frequency offset may cause an intra-group aperiodic cross-correlation value of the candidate permutation complementary sequence set to be not 0.

For example, in a high-speed movement (for example, a high-speed rail) communication scenario, frequency offset does not exceed one subcarrier spacing. The permutation complementary sequence set is obtained by restricting an intra-group sequence set index number of the candidate permutation complementary sequence set. That is, the permutation complementary sequence set is a sequence set that is in the candidate permutation complementary sequence set and whose $l$ belongs to the following set:

$$l\in\left\{\dfrac{3M}{Z}\times i+j\ \middle|\ i=0,1,\ldots,\dfrac{N}{3}-1, j=0,1,\ldots,\dfrac{M}{Z}-1\right\}.$$

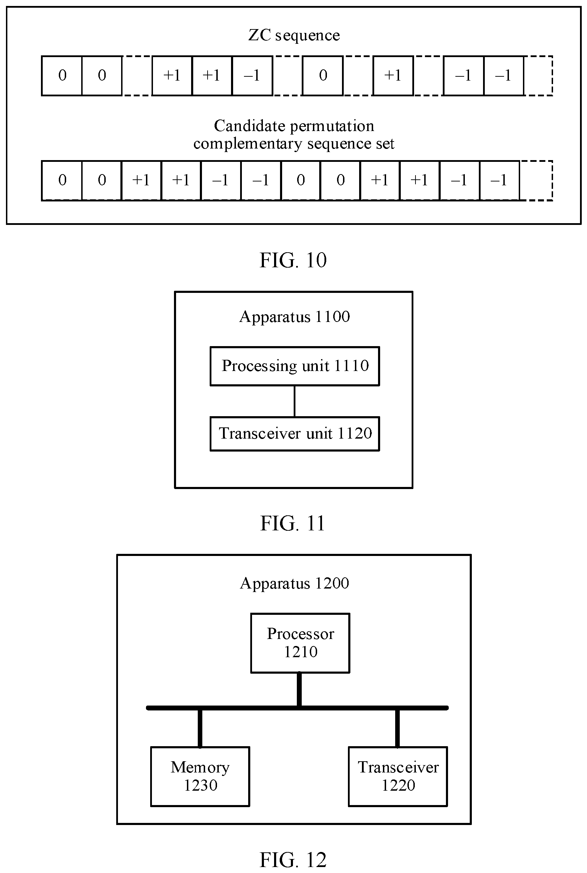

FIG. 10 is a diagram of comparison between the ZC sequence and the candidate permutation complementary sequence set using the restricted set to combat frequency offset. As shown in FIG. 10, "0" indicates a valid sequence/permutation complementary sequence set, "+1" indicates that the sequence is positively offset by one subcarrier, and "-1" indicates that the sequence is negatively offset by one subcarrier. It can be learned that when the ZC sequence uses the restricted set to combat frequency offset that does not exceed one subcarrier spacing, a quantity of available cyclic shifts in the restricted set is a part of a quantity of sequences in a non-restricted set. Generally, considering that there may be one or more sequences in a blank area in a dashed box shown in the figure, the quantity of available cyclic shifts in the restricted set is 1/6 to 1/3 of the quantity of sequences in the non-restricted set. Under a same time-frequency resource condition, when the permutation complementary sequence set is used to combat frequency offset that does not exceed one subcarrier spacing, the permutation complementary sequence set satisfies an ideal intra-group aperiodic cross-correlation property, and there are $\dfrac{M\times\left\lfloor\dfrac{N}{3}\right\rfloor}{Z}$ zero-correlation sequence sets in total in the group. A quantity of intra-group sequence set index numbers is close to 1/3 of a quantity of index numbers in the candidate permutation complementary sequence set. That is, the quantity of permutation complementary sequence sets in the group is close to 1/3 of the quantity of candidate permutation complementary sequence sets.

Therefore, when $N > M > Z$ is configured, the transmitting end may not need to add a cyclic prefix to the permutation complementary sequence set obtained by restricting an intra-group sequence set index number of the candidate permutation complementary sequence set. This reduces overheads and improves spectral efficiency, further improves a sequence capacity, and is applicable to a high-speed movement communication scenario.

**In** a possible implementation, in a random access scenario, the transmitting end is a terminal device, the receiving end is a network device, and the sending a signal based on the permutation complementary sequence set includes: The terminal device sends a random access signal to the network device based on the permutation complementary sequence set.

Optionally, the length $N$ of the member sequence and the quantity $M$ of member sequences are sent by the network device to the terminal device, or are agreed on in a protocol.

Optionally, the length $Z$ of the zero correlation zone, a start value $k$ of a group index number of the permutation complementary sequence set, and a start value $l$ of the intra-group sequence set index number of the permutation complementary sequence set are sent by the network device to the terminal device, or are agreed on in a protocol.

The network device and the terminal device determine permutation complementary sequence sets based on the start value $k$ of the group index number, and the terminal device randomly selects a permutation complementary sequence set from the permutation complementary sequence sets to send the signal.

Optionally, there is a correspondence between the group index number and a group sequence number, and the correspondence is agreed on in a protocol or preconfigured on a network side.

In a possible implementation, the network device and the terminal device may calculate a quantity $\dfrac{N \times M}{Z}$ of sequence sets in the group based on the length $N$ of the member sequence, the quantity $M$ of member sequences, and the length $Z$ of the zero correlation zone. Then, the network device and the terminal device may round up a quotient of a quantity of permutation complementary sequence sets required by a cell and a quantity of sequence sets in the group, to obtain a quantity C of groups of permutation complementary sequence sets. Then, the network device and the terminal device may determine, based on the start value $k$ of the group index number, a group sequence number corresponding to the group index number, and sequentially determine C groups of permutation complementary sequence sets in an order of the group sequence numbers. In the previous *C - 1* groups of permutation complementary sequence sets, a quantity of permutation complementary sequence sets in each group is $\dfrac{N \times M}{Z}$ , and a quantity of permutation complementary sequence sets in the $C^{\text{th}}$ group is a remainder obtained by dividing the quantity of permutation complementary sequence sets required by the cell by the quantity $\dfrac{N \times M}{Z}$ of sequence sets in the group.

The quantity of permutation complementary sequence sets required by the cell is a positive integer, and may be agreed on in a protocol or indicated by the network device for the terminal device by using signaling.

For example, the quantity of permutation complementary sequence sets required by the cell is 64. The protocol stipulates that a correspondence between a group index number and a group sequence number of a permutation complementary sequence set is: when a group sequence number is 1, a group index number is $k = 3$ ; when a group sequence number is 2, a group index number is $k = 1$ ; when a group sequence number is 3, a group index number is $k = 5$ ; and when a group sequence number is $Z$ - 1, a group index number is $k = 4$ . The correspondence between a group index number and a group sequence number may be shown in Table 4.

Table 4

| Group sequence number | Group index number |
|---|---|
| 1 | $k = 3$ |
| 2 | $k = 1$ |
| 3 | $k = 5$ |
| ... | ... |
| $Z$ - 1 | $k = 4$ |

When $\dfrac{N \times M}{Z}$ is greater than or equal to the quantity 64 of permutation complementary sequence sets required by the cell, and the start value of the group index number of the permutation complementary sequence set is $k = 3$ ,

that is, the quantity of permutation complementary sequence sets in the group is greater than or equal to the quantity 64 of permutation complementary sequence sets required by the cell, the transmitting end may randomly select a permutation complementary sequence set from permutation complementary sequence sets whose group sequence number is 1 to send the signal. When a quantity $\dfrac{N \times M}{Z}$ of permutation complementary sequence sets in a group is less than the quantity 64 of permutation complementary sequence sets required by the cell, after determining a group $k = 3$ of permutation complementary sequence sets, the transmitting end may then determine a group $k = 1$ of permutation complementary sequence sets until 64 permutation complementary sequence sets are selected. The transmitting end may randomly select one permutation complementary sequence set from the 64 permutation complementary sequence sets to send the signal. Table 5 lists permutation complementary sequence sets determined by the transmitting end when the start value of the group index number is $k = 3$.

Table 5

| Group sequence number | Group index number | Intra-group index number | | | |
|---|---|---|---|---|---|
| 1 | $k = 3$ | $l = 0$ | $l = 1$ | ... | $l = 30$ |
| 2 | $k = 1$ | $l = 0$ | $l = 1$ | ... | $l = 30$ |
| 3 | $k = 5$ | $l = 0$ | $l = 1$ | | |

As shown in Table 5, $\dfrac{N \times M}{Z}$ is equal to 31, and the transmitting end may determine the group $k = 3$ of permutation complementary sequence sets, the group $k = 1$ of permutation complementary sequence sets, and first two permutation complementary sequence sets in the group $k = 5$ of permutation complementary sequence sets.

It should be understood that sequence numbers of the foregoing processes do not mean execution sequences. The execution sequence of the processes should be determined based on functions and internal logic of the processes, and should not constitute any limitation on implementation processes of embodiments of this application.

The foregoing describes in detail the signal transmission method according to embodiments of this application with reference to FIG. 1 to FIG. 10. The following describes in detail signal transmission apparatuses according to embodiments of this application with reference to FIG. 11 and FIG. 12.

FIG. 11 shows an apparatus 1100 according to an embodiment of this application. The apparatus 1100 may be a transmitting end, or may be an apparatus that can support the transmitting end in implementing a function of the transmitting end, for example, may be a chip or a chip system that may be used in the transmitting end. The apparatus 1100 includes a processing unit 1110 and a transceiver unit 1120.

The processing unit 1110 is configured to determine a permutation complementary sequence set, where the permutation complementary sequence set includes $M$ member sequences, the member sequence includes $N$ member symbols, both $M$ and $N$ are integers greater than 1, the member symbol is obtained by performing a permutation operation on a parameter of the permutation complementary sequence set, the permutation operation is a single mapping operation in a finite domain, and the permutation complementary sequence set satisfies an aperiodic correlation.

The transceiver unit 1120 is configured to send a signal based on the permutation complementary sequence set.

Optionally, the parameter of the permutation complementary sequence set includes at least one of the following: a length $N$ of the member sequence in the permutation complementary sequence set, a quantity $M$ of member sequences, and a length Z of a zero correlation zone in the permutation complementary sequence set. Z is an integer greater than or equal to 1.

Optionally, a quantity of permutation complementary sequence sets is $\left(\dfrac{N \times M}{Z}\right) \times (Z - 1)$, and the $l$th permutation complementary sequence set $s^{[k][l]}$ in the $k$th group of permutation complementary sequence sets is represented as:

$$s^{[k][l]} = \begin{bmatrix} s_0^{[k][l]} \\ M \\ s_{M-1}^{[k][l]} \end{bmatrix} = \begin{bmatrix} s_{0,0}^{[k][l]} & L & s_{0,N-1}^{[k][l]} \\ M & O & M \\ s_{M-1,0}^{[k][l]} & L & s_{M-1,N-1}^{[k][l]} \end{bmatrix},$$

where

*N is* greater than or equal to *M, M is* greater than or equal to *Z, M is* divisible by Z, $k \in \{1,2,...,Z\text{-}1\}$, and

$$l \in \left\{0,1,\ldots,\frac{N \times M}{Z}-1\right\}.$$

The $n^{th}$ member symbol $s_{m,n}^{[k][l]}$ in the $m^{th}$ member sequence in the permutation complementary sequence set $s^{[k][l]}$ is represented as:

$$s_{m,n}^{[k][l]} = e^{j \times \left[\frac{2\pi}{N} \times n \times \Gamma\left(\left\lfloor \frac{l \times Z}{M} \right\rfloor\right) + \frac{2\pi}{M} \times Z \times p \times \Xi\left(l \bmod \frac{M}{Z}\right) + \frac{2\pi}{Z} \times k \times q \times \Pi\left(n \bmod Z\right)\right]},$$

where

$m = p \times Z + q$, $p \in \left\{0,1,\ldots,\frac{M}{Z}-1\right\}$, $q \in \{0,1,...,Z\text{-}1\}$, $n \in \{0,1,...,N\text{-}1\}$, $\Gamma:Z_N \to Z_N$ represents a permutation operation in a finite field $Z_N$, $\Xi: Z_{\frac{M}{Z}} \to Z_{\frac{M}{Z}}$ represents a permutation operation in a finite field $Z_{\frac{M}{Z}}$, and $\Pi:Z_Z \to Z_Z$ represents a permutation operation in a finite field $Z_Z$.

Optionally, $N = M = Z$.

Optionally, $N > M > Z$.

Optionally, $N > M > Z$.

Optionally, the permutation complementary sequence set is a partial sequence set in a candidate permutation complementary sequence set, a quantity of candidate permutation complementary sequence sets is $\left(\frac{N \times M}{Z}\right) \times (Z-1)$, and the $l^{th}$ permutation complementary sequence set $s^{[k][l]}$ in the $k^{th}$ group of permutation complementary sequence sets is represented as:

$$s^{[k][l]} = \begin{bmatrix} s_0^{[k][l]} \\ M \\ s_{M-1}^{[k][l]} \end{bmatrix} = \begin{bmatrix} s_{0,0}^{[k][l]} & L & s_{0,N-1}^{[k][l]} \\ M & O & M \\ s_{M-1,0}^{[k][l]} & L & s_{M-1,N-1}^{[k][l]} \end{bmatrix},$$

where $N > M > Z$, $M$ is divisible by Z, $k \in \{1,2, ..., Z\text{-}1\}$, and $l \in \left\{0,1,\ldots,\frac{N \times M}{Z}-1\right\}$.

The $n^{th}$ member symbol $s_{m,n}^{[k][l]}$ in the $m^{th}$ member sequence in the permutation complementary sequence set $s^{[k][l]}$ is represented as:

$$s_{m,n}^{[k][l]} = e^{j \times \left[\frac{2\pi}{N} \times n \times \Gamma\left(\left\lfloor \frac{l \times Z}{M} \right\rfloor\right) + \frac{2\pi}{M} \times Z \times p \times \Xi\left(l \bmod \frac{M}{Z}\right) + \frac{2\pi}{Z} \times k \times q \times \Pi\left(n \bmod Z\right)\right]},$$

where

$m = p \times Z + q$, $p \in \left\{0,1,\ldots,\frac{M}{Z}-1\right\}$, $q \in \{0,1,...,Z\text{-}1\}$, $n \in \{0,1,...,N\text{-}1\}$, $\Gamma:Z_N \to Z_N$ represents a permutation operation in a finite field $Z_N$, $\Xi : Z_{\frac{M}{Z}} \to Z_{\frac{M}{Z}}$ represents a permutation operation in a finite field $Z_{\frac{M}{Z}}$, and $\Pi : Z_Z \to Z_Z$ represents a permutation operation in a finite field $Z_Z$.

Optionally, the permutation complementary sequence set is a sequence set that is in the candidate permutation complementary sequence set and whose $l$ belongs to the following set:

$$l \in \left\{ \frac{(2f+1) \times M}{Z} \times i + j \;\middle|\; i = 0,1,\ldots,\frac{N}{2f+1}-1, \, j = 0,1,\ldots,\frac{M}{Z}-1 \right\},$$

where

$f$ is a positive integer.

Optionally, the processing unit 1110 is further configured to: determine a target permutation complementary sequence set from the permutation complementary sequence set; and map the target permutation complementary sequence set to $N$ member symbols and $M$ subcarriers, to generate a signal. The transceiver unit 1120 is further configured to send the signal.

Optionally, the transceiver unit 1120 is further configured to send a random access signal to a network device based on the permutation complementary sequence set.

Optionally, the length $N$ of the member sequence and the quantity $M$ of member sequences are sent by the network device to the apparatus, or are agreed on in a protocol.

It should be understood that the apparatus 1100 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art should understand that the apparatus 1100 may be specifically the transmitting end in the foregoing embodiments, and may be configured to perform the procedures and/or steps corresponding to the transmitting end in the foregoing method embodiments. To avoid repetition, details are not described herein again.

The apparatus 1100 in the foregoing solutions has functions of implementing corresponding steps performed by the transmitting end in the foregoing methods. The function may be implemented by hardware, or may be implemented by hardware executing corresponding software. The hardware or software includes one or more modules corresponding to the foregoing functions. For example, the transceiver unit may specifically include a receiving unit and a sending unit, the receiving unit and/or the sending unit may be replaced by a transceiver (for example, the sending unit may be replaced by a transmitter, and the receiving unit may be replaced by a receiver), and another unit such as the processing unit may be replaced by a processor, to separately perform receiving and sending operations and related processing operations in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 11 may be the transmitting end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 12 shows another signal transmission apparatus 1200 according to an embodiment of this application. The apparatus 1200 includes a processor 1210, a transceiver 1220, and a memory 1230. The processor 1210, the transceiver 1220, and the memory 1230 communicate with each other through an internal connection path. The memory 1230 is configured to store instructions. The processor 1210 is configured to execute the instructions stored in the memory 1230, to control the transceiver 1220 to send a signal and/or receive a signal.

It should be understood that the apparatus 1200 may be specifically the transmitting end in the foregoing embodiments, and may be configured to perform steps and/or procedures of the transmitting end in the foregoing method embodiments. Optionally, the memory 1230 may include a read-only memory and a random access memory, and provide instructions and data for the processor. A part of the memory may further include a non-volatile random access memory. For example, the memory may further store information of a device type. The processor 1210 may be configured to execute the instructions stored in the memory. When the processor 1210 executes the instructions stored in the memory, the processor 1210 is configured to perform the steps and/or procedures corresponding to the first terminal device or the network device in the foregoing method embodiments. The transceiver 1220 may include a transmitter and a receiver. The transmitter may be configured to implement steps and/or procedures that are corresponding to the transceiver and that are used to perform a sending action, and the receiver may be configured to implement steps and/or procedures that are corresponding to the transceiver and that are used to perform a receiving action.

It should be understood that, in this embodiment of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software units in the processor. A software unit may be located in a mature storage medium in the art, such as a random access memory, a flash memory, a read-only memory, a programmable read-only memory, an electrically erasable programmable memory, a register, or the like. The storage medium is located in the memory, and a processor reads instructions in the memory and completes the steps in the foregoing methods in combination with hardware of the processor. To avoid repetition, details are not described herein again.

An embodiment of this application further provides a communication system. The communication system may include the foregoing transmitting end and the foregoing receiving end.

According to the method provided in embodiments of this application, this application further provides a computer-readable storage medium. The computer-readable storage medium is configured to store a computer program, and the computer program is used to implement the steps or procedures performed by the transmitting end in the foregoing embodiments.

According to the method provided in embodiments of this application, this application further provides a computer program product. The computer program product includes a computer program (or referred to as code or instructions). When the computer program runs on a computer, the computer may perform the steps or procedures performed by the transmitting end in the foregoing embodiments.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1.  A signal transmission method, comprising:

    determining a permutation complementary sequence set, wherein the permutation complementary sequence set comprises $M$ member sequences, the member sequence comprises N member symbols, both $M$ and $N$ are integers greater than 1, the member symbol is obtained by performing a permutation operation on a parameter of the permutation complementary sequence set, the permutation operation is a single mapping operation in a finite domain, and the permutation complementary sequence set satisfies an aperiodic correlation; and
    sending a signal based on the permutation complementary sequence set.

2.  The method according to claim 1, wherein the parameter of the permutation complementary sequence set comprises at least one of the following:
    a length $N$ of the member sequence in the permutation complementary sequence set, a quantity M of member sequences, and a length Z of a zero correlation zone in the permutation complementary sequence set, wherein Z is an integer greater than or equal to 1.

3.  The method according to claim 2, wherein a quantity of permutation complementary sequence sets is $\left(\dfrac{N\times M}{Z}\right)\times(Z-1)$, and the $l^{th}$ permutation complementary sequence set $s^{[k][l]}$ in the $k^{th}$ group of permutation complementary sequence sets is represented as:

$$s^{[k][l]} = \begin{bmatrix} s_0^{[k][l]} \\ \mathrm{M} \\ s_{M-1}^{[k][l]} \end{bmatrix} = \begin{bmatrix} s_{0,0}^{[k][l]} & \mathrm{L} & s_{0,N-1}^{[k][l]} \\ \mathrm{M} & \mathrm{O} & \mathrm{M} \\ s_{M-1,0}^{[k][l]} & \mathrm{L} & s_{M-1,N-1}^{[k][l]} \end{bmatrix},$$

    wherein

    $N$ is greater than or equal to $M$, $M$ is greater than or equal to $Z$, $M$ is divisible by $Z$, $k \in \{1,2,...,Z\text{-}1\}$, and

$$l \in \left\{0,1,\ldots,\frac{N\times M}{Z}-1\right\}; \text{ and}$$

    the $n^{th}$ member symbol $s_{m,n}^{[k][l]}$ in the $m^{th}$ member sequence in the permutation complementary sequence set $s^{[k][l]}$ is represented as:

$$s_{m,n}^{[k][l]} = e^{j\times\left[\frac{2\pi}{N}\times n\times\Gamma\left(\left\lfloor\frac{l\times Z}{M}\right\rfloor\right)+\frac{2\pi}{M}\times Z\times p\times\Xi\left(l\bmod\frac{M}{Z}\right)+\frac{2\pi}{Z}\times k\times q\times\Pi\left(n\bmod Z\right)\right]},$$

    wherein

    $m = p \times Z + q$, $p \in \left\{0,1,\ldots,\dfrac{M}{Z}-1\right\}$, $q \in \{0,1,...,Z\text{-}1\}$, $n \in \{0,1,...,N\text{-}1\}$, $\Gamma:Z_N \to Z_N$ represents a permutation operation in a finite field $Z_N$, $\quad \Xi : Z_{\frac{M}{Z}} \to Z_{\frac{M}{Z}} \quad$ represents a permutation operation in a finite field $\quad Z_{\frac{M}{Z}}$, and

$\Pi : Z_Z \to Z_Z$ represents a permutation operation in a finite field $Z_Z$.

4. The method according to claim 3, wherein $N = M = Z$.

5. The method according to claim 3, wherein $N > M = Z$.

6. The method according to claim 3, wherein $N > M > Z$.

7. The method according to claim 2, wherein the permutation complementary sequence set is a partial sequence set in a candidate permutation complementary sequence set, a quantity of candidate permutation complementary sequence sets is $\left( \dfrac{N \times M}{Z} \right) \times (Z - 1)$, and the $l^{\text{th}}$ permutation complementary sequence set $s^{[k][l]}$ in the $k^{\text{th}}$ group of permutation complementary sequence sets is represented as:

$$s^{[k][l]} = \begin{bmatrix} s_0^{[k][l]} \\ M \\ s_{M-1}^{[k][l]} \end{bmatrix} = \begin{bmatrix} s_{0,0}^{[k][l]} & L & s_{0,N-1}^{[k][l]} \\ M & O & M \\ s_{M-1,0}^{[k][l]} & L & s_{M-1,N-1}^{[k][l]} \end{bmatrix},$$

wherein

$N > M > Z7$, M is divisible by Z, $k \in \{1, 2, \ldots, Z-1\}$, and $l \in \left\{ 0, 1, \ldots, \dfrac{N \times M}{Z} - 1 \right\}$; and

the $n^{\text{th}}$ member symbol $s_{m,n}^{[k][l]}$ in the $m^{\text{th}}$ member sequence in the permutation complementary sequence set $s^{[k][l]}$ is represented as:

$$s_{m,n}^{[k][l]} = e^{j \times \left[ \frac{2\pi}{N} \times n \times \Gamma\left( \left\lfloor \frac{l \times Z}{M} \right\rfloor \right) + \frac{2\pi}{M} \times Z \times p \times \Xi\left( l \bmod \frac{M}{Z} \right) + \frac{2\pi}{Z} \times k \times q \times \Pi\left( n \bmod Z \right) \right]},$$

wherein

$m = p \times Z + q$, $p \in \left\{ 0, 1, \ldots, \dfrac{M}{Z} - 1 \right\}$, $q \in \{0, 1, \ldots, Z-1\}$, $n \in \{0, 1, \ldots, N-1\}$, $\Gamma : Z_N \to Z_N$ represents a permutation operation in a finite field $Z_N$, $\quad \Xi : Z_{\frac{M}{Z}} \to Z_{\frac{M}{Z}} \quad$ represents a permutation operation in a finite field $\quad Z_{\frac{M}{Z}}$, and

$\Pi : Z_Z \to Z_Z$ represents a permutation operation in a finite field $Z_Z$.

8. The method according to claim 7, wherein the permutation complementary sequence set is a sequence set that is in the candidate permutation complementary sequence set and whose $l$ belongs to the following set:

$$l \in \left\{ \dfrac{(2f+1) \times M}{Z} \times i + j \,\middle|\, i = 0, 1, \ldots, \dfrac{N}{2f+1} - 1, j = 0, 1, \ldots, \dfrac{M}{Z} - 1 \right\},$$

wherein

*f* is a positive integer.

9. The method according to any one of claims 1 to 8, wherein the sending a signal based on the permutation complementary sequence set comprises:

   determining a target permutation complementary sequence set from the permutation complementary sequence set; and

   mapping the target permutation complementary sequence set to *N* member symbols and *M* subcarriers, to generate the signal, and sending the signal.

10. The method according to any one of claims 1 to 9, wherein the sending a signal based on the permutation complementary sequence set comprises:

    sending, by a terminal device, a random access signal to a network device based on the permutation complementary sequence set.

11. The method according to claim 10, wherein the length *N* of the member sequence and the quantity *M* of member sequences are sent by the network device to the terminal device, or are agreed in a protocol.

12. A signal transmission apparatus, comprising:

    a processing unit, configured to determine a permutation complementary sequence set, wherein the permutation complementary sequence set comprises *M* member sequences, the member sequence comprises *N* member symbols, both *M* and *N* are integers greater than 1, the member symbol is obtained by performing a permutation operation on a parameter of the permutation complementary sequence set, the permutation operation is a single mapping operation in a finite domain, and the permutation complementary sequence set satisfies an aperiodic correlation; and

    a transceiver unit, configured to send a signal based on the permutation complementary sequence set.

13. The apparatus according to claim 12, wherein the parameter of the permutation complementary sequence set comprises at least one of the following:

    a length *N* of the member sequence in the permutation complementary sequence set, a quantity *M* of member sequences, and a length *Z* of a zero correlation zone in the permutation complementary sequence set.

14. The apparatus according to claim 13, wherein a quantity of permutation complementary sequence sets is

    $\left(\dfrac{N \times M}{Z}\right) \times (Z-1)$, and the $l^{th}$ permutation complementary sequence set $\boldsymbol{s}^{[k][l]}$ in the $k^{th}$ group of permutation complementary sequence sets is represented as:

$$\boldsymbol{s}^{[k][l]} = \begin{bmatrix} \boldsymbol{s}_0^{[k][l]} \\ \mathrm{M} \\ \boldsymbol{s}_{M-1}^{[k][l]} \end{bmatrix} = \begin{bmatrix} s_{0,0}^{[k][l]} & \mathrm{L} & s_{0,N-1}^{[k][l]} \\ \mathrm{M} & \mathrm{O} & \mathrm{M} \\ s_{M-1,0}^{[k][l]} & \mathrm{L} & s_{M-1,N-1}^{[k][l]} \end{bmatrix},$$

    wherein

    *N* is greater than or equal to *M*, *M* is greater than or equal to *Z*, *M* is divisible by *Z*, $k \in \{1,2,...,Z\text{-}1\}$, and

    $l \in \left\{0,1,...,\dfrac{N \times M}{Z}-1\right\}$ ; and

    the $n^{th}$ member symbol $s_{m,n}^{[k][l]}$ in the $m^{th}$ member sequence in the permutation complementary sequence set $s^{[k][l]}$ is represented as:

$$s_{m,n}^{[k][l]} = e^{j \times \left[ \frac{2\pi}{N} \times n \times \Gamma\left( \left\lfloor \frac{l \times Z}{M} \right\rfloor \right) + \frac{2\pi}{M} \times Z \times p \times \Xi\left( l \bmod \frac{M}{Z} \right) + \frac{2\pi}{Z} \times k \times q \times \Pi\left( n \bmod Z \right) \right]},$$

wherein

$m = p \times Z + q$, $\quad p \in \left\{ 0, 1, \ldots, \frac{M}{Z} - 1 \right\}$, $q \in \{0,1,\ldots,Z\text{-}1\}$, $n \in \{0,1,\ldots,N\text{-}1\}$, $\Gamma: Z_N \to Z_N$ represents a permutation operation in a finite field $Z_N$, $\quad \Xi: Z_{\frac{M}{Z}} \to Z_{\frac{M}{Z}}$ represents a permutation operation in a finite field $Z_{\frac{M}{Z}}$, and

$\Pi: Z_Z \to Z_Z$ represents a permutation operation in a finite field $Z_Z$.

**15.** The apparatus according to claim 14, wherein $N = M = Z$.

**16.** The apparatus according to claim 14, wherein $N > M = Z$.

**17.** The apparatus according to claim 14, wherein $N > M > Z$.

**18.** The apparatus according to claim 13, wherein the permutation complementary sequence set is a partial sequence set in a candidate permutation complementary sequence set, a quantity of candidate permutation complementary sequence sets is $\left( \frac{N \times M}{Z} \right) \times (Z - 1)$, and the $l$th permutation complementary sequence set $s^{[k][l]}$ in the $k$th group of permutation complementary sequence sets is represented as:

$$\boldsymbol{s}^{[k][l]} = \begin{bmatrix} \boldsymbol{s}_0^{[k][l]} \\ M \\ \boldsymbol{s}_{M-1}^{[k][l]} \end{bmatrix} = \begin{bmatrix} s_{0,0}^{[k][l]} & L & s_{0,N-1}^{[k][l]} \\ M & O & M \\ s_{M-1,0}^{[k][l]} & L & s_{M-1,N-1}^{[k][l]} \end{bmatrix},$$

wherein

$N > M > Z$, $M$ is divisible by $Z$, $k \in \{1,2,\ldots,Z\text{-}1\}$, and $l \in \left\{ 0, 1, \ldots, \frac{N \times M}{Z} - 1 \right\}$, and

the $n$th member symbol $s_{m,n}^{[k][l]}$ in the $m$th member sequence in the permutation complementary sequence set $s^{[k][l]}$ is represented as:

$$s_{m,n}^{[k][l]} = e^{j \times \left[ \frac{2\pi}{N} \times n \times \Gamma\left( \left\lfloor \frac{l \times Z}{M} \right\rfloor \right) + \frac{2\pi}{M} \times Z \times p \times \Xi\left( l \bmod \frac{M}{Z} \right) + \frac{2\pi}{Z} \times k \times q \times \Pi\left( n \bmod Z \right) \right]},$$

wherein

$m = p \times Z + q$, $\quad p \in \left\{ 0, 1, \ldots, \frac{M}{Z} - 1 \right\}$, $q \in \{0,1,\ldots,Z\text{-}1\}$, $n \in \{0,1,\ldots,N\text{-}1\}$, $\Gamma: Z_N \to Z_N$ represents a permutation operation in a finite field $Z_N$, $\quad \Xi: Z_{\frac{M}{Z}} \to Z_{\frac{M}{Z}}$ represents a permutation operation in a finite field $Z_{\frac{M}{Z}}$, and

$\Pi: Z_Z \to Z_Z$ represents a permutation operation in a finite field $Z_Z$.

**19.** The apparatus according to claim 18, wherein the permutation complementary sequence set is a sequence set that is in the candidate permutation complementary sequence set and whose *l* belongs to the following set:

$$l \in \left\{ \frac{(2f+1) \times M}{Z} \times i + j \,\middle|\, i = 0, 1, \ldots, \frac{N}{2f+1} - 1, j = 0, 1, \ldots, \frac{M}{Z} - 1 \right\},$$

wherein
*f* is a positive integer.

**20.** The apparatus according to any one of claims 12 to 19, wherein the processing unit is further configured to:

determine a target permutation complementary sequence set from the permutation complementary sequence set; and
map the target permutation complementary sequence set to *N* member symbols and *M* subcarriers, to generate the signal; and
the transceiver unit is further configured to send the signal.

**21.** The apparatus according to any one of claims 12 to 20, wherein the transceiver unit is further configured to: send a random access signal to a network device based on the permutation complementary sequence set.

**22.** The apparatus according to claim 21, wherein the length *N* of the member sequence and the quantity *M* of member sequences are sent by the network device to the apparatus, or are agreed in a protocol.

**23.** A signal transmission apparatus, comprising a processor, wherein the processor is coupled to a memory, the memory is configured to store a computer program, and when the processor invokes the computer program, the apparatus is enabled to perform the method according to any one of claims 1 to 11.

**24.** A computer-readable storage medium, configured to store a computer program, wherein the computer program comprises instructions used to implement the method according to any one of claims 1 to 11.

**25.** A computer program product, comprising a computer program, wherein when the computer program is run, a computer is enabled to perform the method according to any one of claims 1 to 11.

100

120

110

120

FIG. 1

Periodic correlation

Sequence length

| $u_0$ | $u_1$ | $u_2$ | $u_3$ | $u_4$ | $u_5$ | $u_6$ | $u_7$ |
|-------|-------|-------|-------|-------|-------|-------|-------|

Overlapping part

| $v_3$ | $v_4$ | $v_5$ | $v_6$ | $v_7$ | $v_0$ | $v_1$ | $v_2$ |
|-------|-------|-------|-------|-------|-------|-------|-------|

FIG. 2

Aperiodic correlation

Sequence length

| $u_0$ | $u_1$ | $u_2$ | $u_3$ | $u_4$ | $u_5$ | $u_6$ | $u_7$ |
|-------|-------|-------|-------|-------|-------|-------|-------|

Overlapping part

| $v_0$ | $v_1$ | $v_2$ | $v_3$ | $v_4$ | $v_5$ | $v_6$ | $v_7$ |
|-------|-------|-------|-------|-------|-------|-------|-------|

FIG. 3

PRACH format 0

FIG. 4

PRACH format 1

FIG. 5

600

FIG. 6

$s^{[1][0]}$ $s^{[1][1]}$ $s^{[1][N-1]}$

$s^{[2][0]}$ $s^{[2][1]}$ $s^{[2][N-1]}$

$s^{[N-1][0]}$ $s^{[N-1][1]}$ $s^{[N-1][N-1]}$

$N-1$ low correlation groups

$N$ zero-correlation sequence sets in a group

FIG. 7

$s^{[1][0]}$ $s^{[1][1]}$ $s^{[1][N-1]}$

$s^{[2][0]}$ $s^{[2][1]}$ $s^{[2][N-1]}$

$s^{[M-1][0]}$ $s^{[M-1][1]}$ $s^{[M-1][N-1]}$

$M-1$ low correlation groups

$N$ zero-correlation sequence sets in a group

FIG. 8

$s^{[1][0]}$ $s^{[1][1]}$ $s^{[1][NM/Z-1]}$

$s^{[2][0]}$ $s^{[2][1]}$ $s^{[2][NM/Z-1]}$

$s^{[Z-1][0]}$ $s^{[Z-1][1]}$ $s^{[Z-1][NM/Z-1]}$

$Z-1$ low correlation groups

$NM/Z$ zero-correlation sequence sets in a group

FIG. 9

ZC sequence

| 0 | 0 | | +1 | +1 | −1 | | 0 | | +1 | | −1 | −1 | |

Candidate permutation
complementary sequence set

| 0 | 0 | +1 | +1 | −1 | −1 | 0 | 0 | +1 | +1 | −1 | −1 | |

FIG. 10

Apparatus 1100

Processing unit 1110

Transceiver unit 1120

FIG. 11

Apparatus 1200

Processor
1210

Memory
1230

Transceiver
1220

FIG. 12

## INTERNATIONAL SEARCH REPORT

| International application No. |
|---|
| **PCT/CN2022/130960** |

**A. CLASSIFICATION OF SUBJECT MATTER**

H04L27/00(2006.01)i; H04J13/00(2011.01)i

According to International Patent Classification (IPC) or to both national classification and IPC

**B. FIELDS SEARCHED**

Minimum documentation searched (classification system followed by classification symbols)

IPC: H04L H04J

Documentation searched other than minimum documentation to the extent that such documents are included in the fields searched

Electronic data base consulted during the international search (name of data base and, where practicable, search terms used)

USTXT; EPTXT; WOTXT; CNTXT; CNABS; VEN; CNKI; IEEE: 非周期相关, 非周期性相关, 互补序列集, 序列集, 映射, 置换, 置换互补序列, complementary sequence set?, aperiodic+, correlated, correlation, mapped, mapping, permutation

**C. DOCUMENTS CONSIDERED TO BE RELEVANT**

| Category* | Citation of document, with indication, where appropriate, of the relevant passages | Relevant to claim No. |
|---|---|---|
| A | CN 101355374 A (CHONGQING WIRELESS OASIS COMMUNICATION TECHNOLOGY CO., LTD.) 28 January 2009 (2009-01-28) description, page 4, line 12 to page 6, line 13 | 1-25 |
| A | CN 102291197 A (CHONGQING UNIVERSITY) 21 December 2011 (2011-12-21) description, paragraphs [0045]-[0054] | 1-25 |
| A | US 2020136697 A1 (FUDAN UNIVERSITY) 30 April 2020 (2020-04-30) entire document | 1-25 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **23 May 2023** | **03 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/130960**

| Patent document cited in search report | | | Publication date (day/month/year) | Patent family member(s) | | | Publication date (day/month/year) |
|---|---|---|---|---|---|---|---|
| CN | 101355374 | A | 28 January 2009 | CN | 101355374 | B | 22 August 2012 |
| CN | 102291197 | A | 21 December 2011 | CN | 102291197 | B | 08 July 2015 |
| US | 2020136697 | A1 | 30 April 2020 | CN | 109495142 | A | 19 March 2019 |
| | | | | CN | 109495142 | B | 22 January 2021 |

Form PCT/ISA/210 (patent family annex) (July 2022)